# EUROPÄISCHE PATENTANMELDUNG

(11) **EP 4 339 863 A1**
(43) Veröffentlichungstag der Anmeldung: **20.03.2024**
(21) Anmeldenummer: 22195917.4
(22) Anmeldetag: 15.09.2022
(51) Int. Cl.: G06Q 10/083

(54) **BESTIMMEN EINES ODER MEHRERER ZUGFAHRZEUGE FÜR EIN ZUGGESPANN**

(71) Anmelder: Schmitz Cargobull AG, 48341 Altenberge (DE)
(72) Erfinder: BEELMANN, Reinhard, 45721 Haltern am See (DE); SCHMITZ, Andreas, 48161 Münster (DE); KAUP, Carsten, 48653 Coesfeld (DE)
(74) Vertreter: Cohausz & Florack

(57) **Zusammenfassung**

Es wird unter anderem offenbart ein Verfahren zum Bestimmen eines oder mehrerer Zugfahrzeuge (101-105) für ein Zuggespann in einem System (1) umfassend eine Mehrzahl von elektrisch angetriebenen Zugfahrzeugen (101-105), wobei jedes Zugfahrzeug der Mehrzahl von Zugfahrzeugen (101-105) eingerichtet ist, mit einem jeweiligen Anhänger (106) ein Zuggespann zu bilden und den jeweiligen Anhänger (106) zu ziehen, wobei das Verfahren umfasst:
- Erhalten (300) einer ersten Transportauftraginformation eines ersten Transportauftrags, wobei die erste Transportauftraginformation eine Beladeposition (110), an der ein Anhänger (106)mit Waren beladen werden soll, und eine Entladeposition (111), an der die Waren von dem Anhänger entladen werden sollen, repräsentieren,
- Erhalten (301) von ersten Zugfahrzeuginformationen, wobei die ersten Zugfahrzeuginformationen, zumindest für ein erstes Zugfahrzeug (101) der Mehrzahl von Zugfahrzeugen (101-105), eine aktuelle Position des jeweiligen Zugfahrzeugs und eine geschätzte aktuelle Reichweite des jeweiligen Zugfahrzeugs repräsentieren,
- Bestimmen (302) des ersten Zugfahrzeugs (101) aus der Mehrzahl von Zugfahrzeugen (101-105), um mit dem Anhänger (106) ein erstes Zuggespann zum Transport der Waren entlang eines ersten Abschnitts (112a) einer Transportroute (112a/b) zu bilden, wobei das Bestimmen (302) des ersten Zugfahrzeugs (101) aus der Mehrzahl von Zugfahrzeugen (101-105) unter Berücksichtigung der ersten Transportauftraginformation und der ersten Zugfahrzeuginformationen erfolgt.

## Beschreibung

### Gebiet

Beispielhafte Ausführungsformen der Erfindung betreffen Lösungen zum Bestimmen eines oder mehrerer Zugfahrzeuge für ein Zuggespann.

### Hintergrund

Im Stand der Technik sind elektrisch angetriebene Zugfahrzeuge bekannt, die mit einem Anhänger ein Zuggespann bilden und den Anhänger ziehen können. Solche Zuggespanne können zum Beispiel zum Transport von Waren entlang einer Transportroute (z.B. von einer Beladeposition zu einer Entladeposition) eingesetzt werden. Allerdings ist die Reichweite solcher elektrisch angetriebener Zugfahrzeuge begrenzt, so dass sich die Transportdauer, wenn eine Batterie des elektrisch angetriebenen Zugfahrzeugs ein oder mehrmals während des Transports aufgeladen muss, im Vergleich zu herkömmlichen Zugfahrzeugen mit einem Verbrennungsmotor deutlich erhöhen kann.

### Zusammenfassung einiger beispielhafter Ausführungsformen der Erfindung

Eine Aufgabe der Erfindung ist es daher, die oben genannten Nachteile zu überwinden.

Gemäß der Erfindung wird ein Verfahren zum Bestimmen eines oder mehrerer Zugfahrzeuge für ein Zuggespann in einem System umfassend eine Mehrzahl von elektrisch angetriebenen Zugfahrzeugen offenbart, wobei jedes Zugfahrzeug der Mehrzahl von Zugfahrzeugen eingerichtet ist, mit einem jeweiligen Anhänger ein Zuggespann zu bilden und den jeweiligen Anhänger zu ziehen, wobei das Verfahren umfasst:
- Erhalten einer ersten Transportauftraginformation eines ersten Transportauftrag, wobei die erste Transportauftraginformation eine Beladeposition, an der ein Anhänger mit Waren beladen werden soll, und eine Entladeposition, an der die Waren von dem Anhänger entladen werden sollen, repräsentieren,
- Erhalten von ersten Zugfahrzeuginformationen, wobei die ersten Zugfahrzeuginformationen, zumindest für ein erstes Zugfahrzeug der Mehrzahl von Zugfahrzeugen, eine aktuelle Position des jeweiligen Zugfahrzeugs und eine geschätzte aktuelle Reichweite des jeweiligen Zugfahrzeugs repräsentieren,
- Bestimmen des ersten Zugfahrzeugs aus der Mehrzahl von Zugfahrzeugen, um mit dem Anhänger ein erstes Zuggespann zum Transport der Waren entlang eines ersten Abschnitts einer Transportroute zu bilden, wobei das Bestimmen des ersten Zugfahrzeugs aus der Mehrzahl von Zugfahrzeugen unter Berücksichtigung der ersten Transportauftraginformation und der ersten Zugfahrzeuginformationen erfolgt.

Das offenbarte Verfahren wird beispielsweise zumindest teilweise durch einen Server ausgeführt. Dass das Verfahren zumindest teilweise durch einen Server ausgeführt wird, soll beispielsweise derart verstanden werden, dass der Server zumindest einen Teil der Schritte des Verfahrens ausführt. Dabei soll unter dem Server (1) eine Servervorrichtung (z.B. die unten offenbarte Servervorrichtung) oder (2) eine Servercloud umfassend mehrere Servervorrichtungen, die miteinander kooperieren, um die Schritte des Verfahrens auszuführen, oder (3) ein virtueller Server verstanden werden. Dabei soll unter einer Servervorrichtung eine physische Vorrichtung mit Hardware-Komponenten verstanden werden.

Ferner wird eine Servervorrichtung offenbart, wobei die Servervorrichtung Mittel eingerichtet zur Ausführung des offenbarten Verfahrens umfasst. Die Servervorrichtung ist beispielsweise eine Vorrichtung zum Bestimmen eines oder mehrerer Zugfahrzeuge für ein Zuggespann.

Die Mittel können Hardware- und/oder Software-Komponenten umfassen. Die Mittel können beispielsweise mindestens einen Speicher mit Programmanweisungen eines Computerprogramms (z.B. des unten offenbarten.

Computerprogramms) und mindestens einen Prozessor ausgebildet zum Ausführen von Programmanweisungen aus dem mindestens einen Speicher umfassen. Dementsprechend soll auch eine Servervorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die. Servervorrichtung zu veranlassen, das offenbarte Verfahren auszuführen.

Alternativ oder zusätzlich können die Mittel ferner eine oder mehrere Kommunikationsschnittstellen (z.B. einen oder mehrere drahtgebundene und/oder drahtlose Kommunikationsschnittstellen, z.B. eine drahtlose Kommunikationsschnittstellen in Form einer Funkschnittstelle) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte Servervorrichtung auch andere nicht aufgeführte Mittel umfassen kann.

Ferner wird ein Computerprogramm offenbart, wobei das Computerprogramm Programmanweisungen umfasst, die dazu ausgebildet sind, bei Ausführung durch mindestens einen Prozessor einen Server (z.B. die offenbarte Servervorrichtung) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Ferner wird ein System offenbart, wobei das System umfasst:
- die offenbarte Servervorrichtung;
- einen Anhänger; und
- eine Mehrzahl von Zugfahrzeugen, wobei jedes Zugfahrzeug der Mehrzahl von Zugfahrzeugen eingerichtet ist, mit dem Anhänger ein Zuggespann zu bilden und den Anhänger zu ziehen.

Im Folgenden werden die Eigenschaften des offenbarten Verfahrens (im Folgenden auch als "Verfahren" bezeichnet), der offenbarten Servervorrichtung (im Folgenden auch als "Servervorrichtung" bezeichnet), des offenbarten Computerprogramms (im Folgenden auch als "Computerprogramm" bezeichnet) sowie des offenbarten Systems (im Folgenden auch als "System" bezeichnet) - teilweise beispielhaft - beschrieben. Es versteht sich, dass das Verfahren, die Servervorrichtung, das Computerprogramm und das System zueinander korrespondieren, so dass die Offenbarung eines Merkmals für eine dieser Kategorien als Offenbarung eines korrespondierenden Merkmals für die anderen Kategorien verstanden werden soll.

Das System ist beispielsweise ein System zum Transport von Waren.

Neben der Mehrzahl von elektrisch angetriebenen Zugfahrzeugen umfasst das System beispielsweise eine Mehrzahl von Anhängern.

Unter einem elektrisch angetriebenen Zugfahrzeug soll insbesondere ein durch einen oder mehrere Elektromotoren angetriebenes Straßenfahrzeug verstanden werden. Ein solches elektrisch angetriebenes Zugfahrzeug weist beispielsweise eine Batterie zur Versorgung des/r Elektromotors/en mit elektrischer Energie auf, so dass die jeweils aktuelle Reichweite des Zugfahrzeugs zumindest teilweise basierend auf der jeweils aktuell in der Batterie gespeicherten elektrischen Energie geschätzt werden kann.

Zumindest ein Teil der Mehrzahl von Zugfahrzeugen ist beispielsweise unbemannt und/oder zum teilautonomen oder autonomen Fahren eingerichtet. Zum Beispiel umfasst dieser Teil der Mehrzahl von Zugfahrzeugen das oben offenbarte erste Zugfahrzeug und/oder das weiter unten offenbarte zweite Zugfahrzeug. Mit anderen Worten kann/können das erste Zugfahrzeug und/oder das zweite Zugfahrzeug unbemannt und/oder zum teilautonomen oder autonomen Fahren eingerichtet sein.

Dabei soll unter dem teilautonomen Fahren beispielsweise verstanden werden, dass sich das jeweilige Zugfahrzeug selbsttätig entlang eines Teils einer jeweiligen vorgegebenen Route bewegt; und unter dem autonomen Fahren soll beispielsweise verstanden werden, dass sich das jeweilige Zugfahrzeug selbsttätig entlang der gesamten jeweiligen vorgegebenen Route bewegt. Beispielsweise kann jedes Zugfahrzeug dieses Teils der Mehrzahl von Zugfahrzeugen eingerichtet sein, sich in vorgegebenen Fahrsituationen wie bei geringen Geschwindigkeiten (z.B. Geschwindigkeiten nicht höher als 20 km/h oder 10 km/h oder 7 km/h) und/oder in bekannten Umgebungen (z.B. einem Betriebshof und/oder einem Güter/Containerumschlagplatz) und/oder in wenig komplexen Fahrsituationen (z.B. auf der Autobahn) selbsttätig zu bewegen und in anderen Fahrsituationen durch einen Fahrzeugführer (z.B. an einer entfernten Steuervorrichtung) gesteuert zu werden. Zu diesem Zweck kann jedes Zugfahrzeug dieses Teils der Mehrzahl von Zugfahrzeugen jeweilige Steuermittel eingerichtet zum Steuern einer selbsttätigen Bewegung des jeweiligen Zugfahrzeugs umfassen, die eingerichtet sind, eine selbsttätige Bewegung des jeweiligen Zugfahrzeugs entlang der jeweiligen vorgegebenen Route oder des Teils der jeweiligen vorgegebenen Route beispielsweise unter Berücksichtigung von Umgebungssensorinformationen zu steuern. Die jeweiligen Steuermittel können jeweils Hardware- und/oder Software-Komponenten umfassen. Die jeweiligen Steuermittel können beispielsweise jeweils mindestens einen Speicher mit Programmanweisungen eines Computerprogramms und mindestens einen Prozessor ausgebildet zum Ausführen von Programmanweisungen aus dem mindestens einen Speicher umfassen. Dementsprechend sollen insbesondere auch jeweilige Steuermittel als offenbart verstanden werden, die zumindest einen Prozessor und zumindest einen Speicher mit Programmanweisungen umfassen, wobei der zumindest eine Speicher und die Programmanweisungen eingerichtet sind, gemeinsam mit dem zumindest einen Prozessor das jeweilige Zugfahrzeug während des teilautonomen oder autonomen Fahrens zu steuern.

Ein unbemanntes Fahrzeug ist insbesondere ein Fahrzeug, das weder einen Fahrer noch einen oder mehrere Passagiere transportiert und/oder für den Transport eines Fahrers und eines oder mehrerer Passagiere eingerichtet ist. Zum Beispiel weist ein unbemanntes Fahrzeug keine(n) Sitz(e) für Fahrer und/oder Passagier(e) auf.

Unter einem Anhänger soll insbesondere ein Nutzfahrzeuganhänger für ein Straßenfahrzug wie ein Starrdeichselanhänger oder ein Gelenkdeichselanhänger oder ein Sattelauflieger. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Damit der jeweilige Anhänger ein Zuggespann mit einem jeweiligen Zugfahrzeug bilden kann, weisen der jeweilige Anhänger und das jeweilige Zugfahrzeug beispielsweise jeweilige zueinander korrespondierende Verbindungsmittel auf, die eingerichtet sind, um eine Verbindung (z.B. eine mechanische und/oder elektrische Verbindung) zwischen dem jeweiligen Anhänger und dem jeweiligen Zugfahrzeug herzustellen. Zum Beispiel umfassen die zueinander korrespondierenden Verbindungsmittel korrespondierende Teile eines Kupplungssystems wie einer Sattelkupplung, einer Bolzenkupplung oder einer Kugelkopfkupplung.

Wenn das jeweilige Zugfahrzeug mit dem jeweiligen Anhänger (z.B. durch die oben offenbarten zueinander korrespondierenden Verbindungsmittel) verbunden ist, bilden das jeweilige Zugfahrzeug und der jeweilige Anhänger beispielsweise ein Zuggespann (z.B. einen Lastzug und/oder einen Sattelzug), so dass das jeweilige Zugfahrzeug den jeweiligen Anhänger zieht.

Unter dem Erhalten einer oder mehrerer Information(en) (z.B. einer Transportauftraginformation oder von Zugfahrzeuginformationen) soll beispielsweise verstanden werden, dass die Information(en) von einer entfernten Vorrichtung über eine Kommunikationsverbindung empfangen wird/werden. Alternative oder zusätzlich kann/können eine oder mehrere Information(en) auch als Ergebnis eines Bestimmen der Information(en) erhalten werden kann. Es versteht sich, dass eine oder mehrere Information(en) auch zumindest teilweise von einer entfernten Vorrichtung über eine Kommunikationsverbindung empfangen und zumindest teilweise bestimmt wird/werden. Zum Beispiel kann die erste Transportauftraginformation zumindest teilweise von einer entfernten Vorrichtung empfangen und zumindest teilweise bestimmt werden.

Ein Transportauftrag ist ein Auftrag zum Transport von Waren durch einen Anhänger von einer Beladeposition zu einer Entladeposition. Dementsprechend repräsentiert eine Transportauftraginformation eines solchen Transportauftrags zumindest die Beladeposition, an der der Anhänger mit den Waren beladen werden soll, und die Entladeposition, an der die Waren von dem Anhänger entladen werden sollen.

Die ersten Zugfahrzeuginformationen umfassen zumindest eine Zugfahrzeuginformation für das erste Zugfahrzeug der Mehrzahl von Zugfahrzeugen. Dabei soll eine Zugfahrzeuginformation für ein Zugfahrzeug der Mehrzahl von Zugfahrzeugen eine aktuelle Position des jeweiligen Zugfahrzeugs und eine geschätzte aktuelle Reichweite des jeweiligen Zugfahrzeugs repräsentieren.

Zum Beispiel ist jedes der Zugfahrzeuge der Mehrzahl von Zugfahrzeugen eingerichtet, eine jeweilige Zugfahrzeuginformation (z.B. in regelmäßigen Zeitabständen und/oder zu vorgegebenen Zeitpunkten) bereitzustellen (z.B. zu erzeugen und an die Vorrichtung(en), die das offenbarte Verfahren ausführen, zu senden). Dementsprechend können die ersten Zugfahrzeuginformationen für jedes der Zugfahrzeuge der Mehrzahl von Zugfahrzeugen eine jeweilige Zugfahrzeuginformation, die die aktuelle Position des jeweiligen Zugfahrzeugs und die geschätzte aktuelle Reichweite des jeweiligen Zugfahrzeugs repräsentiert, umfassen.

Unter der aktuellen Position des jeweiligen Zugfahrzeugs soll beispielsweise die zuletzt durch einen Positionssensor des jeweiligen Zugfahrzeugs erfasste Position des jeweiligen Zugfahrzeugs verstanden werden.

Unter der geschätzten aktuellen Reichweite des jeweiligen Zugfahrzeugs soll beispielsweise die Distanz verstanden werden, die das jeweilige Zugfahrzeug aufgrund der in der Batterie des jeweiligen Zugfahrzeugs aktuell gespeicherte elektrischen Energie zurücklegen kann, ohne dass die Batterie aufgeladen werden muss. Um die aktuelle Reichweite des jeweiligen Zugfahrzeugs zu schätzen kann die in der Batterie des jeweiligen Zugfahrzeugs aktuell gespeicherte Energie zumindest teilweise basierend auf durch einen oder mehrere Batteriesensoren zuletzt erfasste(n) Parameter(n) wie die Batteriespannung bestimmt werden. Anschließend kann dann die Distanz, die das das jeweilige Zugfahrzeug zurücklegen kann, ohne dass die Batterie aufgeladen werden muss, basierend auf einem durchschnittlichen Energieverbrauch des jeweiligen Zugfahrzeugs (z.B. des durchschnittlichen Energieverbrauchs in einem vorgegebenen Zeitraum wie seit dem letzten Laden der Batterie oder auf den zuletzt zurückgelegten 500 km oder 250 km oder 100km) bestimmt werden. Die bestimmte Distanz entspricht beispielsweise der geschätzten aktuellen Reichweite des jeweiligen Zugfahrzeugs. Es versteht sich, dass die Erfindung nicht auf dieses Beispiel zum Schätzen der aktuellen Reichweite des jeweiligen Zugfahrzeugs beschränkt ist.

Unter dem Bestimmen des ersten Zugfahrzeugs aus der Mehrzahl von Zugfahrzeugen soll beispielsweise verstanden werden, dass das erste Zugfahrzeug aus der Mehrzahl von Zugfahrzeugen ausgewählt wird, um mit dem Anhänger ein erstes Zuggespann zum Transport der Waren entlang eines ersten Abschnitts einer Transportroute zu bilden. Bei dem Anhänger kann es sich beispielsweise um einen Anhänger handeln, der für den Transport der Waren vorgegebenen ist. Alternativ kann auch vorgesehen sein, dass der Anhänger ebenfalls bestimmt wird, zum Beispiel aus der oben offenbarten Mehrzahl von Anhängern ausgewählt wird. Zum Beispiel kann das Bestimmen des ersten Zugfahrzeugs und/oder des Anhängers gemäß vorgegebenen Regeln (z.B. gemäß einem vorgegebenen Algorithmus wie einem Auswahlalgorithmus) erfolgen.

Das Bestimmen des ersten Zugfahrzeugs aus der Mehrzahl von Zugfahrzeugen soll unter Berücksichtigung der ersten Transportauftraginformation und der ersten Zugfahrzeuginformationen erfolgen. Dabei kann das erste Zugfahrzeug derart bestimmt werden, dass vorgegebene Kriterien erfüllt und/oder im Vergleich zu anderen Zugfahrzeugen der Mehrzahl von Zugfahrzeugen optimiert sind. Beispiele für diese Kriterien sind (i) eine Distanz zwischen der durch die erste Transportauftraginformation repräsentierten Beladeposition und der durch die ersten Zugfahrzeuginformationen repräsentierten aktuellen Position des ersten Zugfahrzeugs und/oder (ii) die durch die ersten Zugfahrzeuginformationen repräsentierte geschätzte aktuelle Reichweite des ersten Zugfahrzeugs.

Der erste Abschnitt der Transportroute startet beispielsweise an der Beladeposition, d.h. die Beladeposition entspricht der Startposition des ersten Abschnitts der Transportroute. Dementsprechend kann es vorteilhaft sein, die Distanz zwischen der durch die erste Transportauftraginformation repräsentierten Beladeposition und der durch die ersten Zugfahrzeuginformationen repräsentierten aktuellen Position des ersten Zugfahrzeugs beim Bestimmen des ersten Zugfahrzeugs aus der Mehrzahl von Zugfahrzeugen zu minimieren, z.B. um den Energieverbrauch für die Anfahrt zu der Beladeposition zu minimieren, so dass das Zugfahrzeug den Anhänger eine möglichst weite Distanz entlang der Transportroute ziehen kann, ohne dass die Batterie des ersten Zugfahrzeugs aufgeladen werden muss. Dabei soll unter der Distanz zwischen der aktuellen Position des ersten Zugfahrzeugs und der Beladeposition beispielsweise die Länge einer Route (z.B. der kürzesten oder schnellsten Route) zwischen der aktuellen Position des ersten Zugfahrzeugs und der Beladeposition verstanden werden.

Alternativ oder zusätzlich kann es vorteilhaft sein, die Distanz die das erste Zugfahrzeug auf der Transportroute zurücklegen kann, ohne dass die Batterie des ersten Zugfahrzeugs aufgeladen werden muss, beim Bestimmen des ersten Zugfahrzeugs aus der Mehrzahl von Zugfahrzeugen zu maximieren, z.B. um die Transportzeit zu minimieren. Die Distanz die das erste Zugfahrzeug auf der Transportroute zurücklegen kann, ohne dass die Batterie des ersten Zugfahrzeugs aufgeladen werden muss, kann beispielsweise basierend auf der durch die ersten Zugfahrzeuginformationen repräsentierten geschätzten aktuellen Reichweite des ersten Zugfahrzeugs bestimmt werden. Zum Beispiel entspricht die Distanz die das erste Zugfahrzeug auf der Transportroute zurücklegen kann, ohne dass die Batterie des ersten Zugfahrzeugs aufgeladen werden muss, der durch die ersten Zugfahrzeuginformationen repräsentierten geschätzten aktuellen Reichweite des ersten Zugfahrzeugs abzüglich der Distanz zwischen der durch die erste Transportauftraginformation repräsentierten Beladeposition und der durch die erste Zugfahrzeuginformation repräsentierte aktuelle Position des ersten Zugfahrzeugs.

Die Erfindung stellt somit eine Lösung bereit, die es ermöglicht ein Zugfahrzeug als erstes Zugfahrzeug zu bestimmen, dass eine möglichst weite Distanz entlang der Transportroute ziehen kann, ohne dass die Batterie des ersten Zugfahrzeugs aufgeladen werden muss. Dies ist insbesondere Vorteilhaft um die Transportdauer möglichst gering zu halten.

Weitere Vorteile der offenbarten Erfindung werden nachfolgend anhand beispielhafter Ausführungsformen des offenbarten Verfahrens, des offenbarten Computerprogramms, der offenbarten Vorrichtung und des offenbarten Systems beschrieben.

In beispielhaften Ausführungsformen umfasst das Bestimmen des ersten Zugfahrzeugs aus der Mehrzahl von Zugfahrzeugen das Bestimmen des ersten Abschnitts der Transportroute und/oder der Transportroute.

Zum Beispiel verläuft die Transportroute von der Beladeposition zur Entladeposition. Zum Beispiel kann die Transportroute von der Beladeposition zur Entladeposition gemäß vorgegebenen Regeln wie einem Algorithmus (z.B. einem vorgegebenen Routenalgorithmus, z.B. einem Routenalgorithmus zum Bestimmen der schnellsten oder kürzesten Route), bestimmt werden.

Zum Beispiel entspricht die Startposition des ersten Abschnitts der Transportroute der Beladeposition und die Endposition des ersten Abschnitts befindet sich beispielsweise an einem ersten Ladepunkt oder in der Nähe (z.B. in einem Umreis von weniger als 20 km, 10 km oder 5km) des ersten Ladepunktes, wobei der erste Ladepunkt eingerichtet ist, mit dem ersten Zugfahrzeug verbunden zu werden, um die Batterie des ersten Zugfahrzeugs aufzuladen. Zum Beispiel kann der erste Abschnitt der Transportroute derart (z.B. gemäß vorgegebenen Regeln wie einem Algorithmus, z.B. einem Routenalgorithmus) bestimmt werden, dass die durch die ersten Zugfahrzeuginformationen repräsentierte geschätzte aktuelle Reichweite des ersten Zugfahrzeugs (z.B. mit einer vorgegebenen Mindestwahrscheinlichkeit) ausreicht, um eine Distanz (i) von der der durch die ersten Zugfahrzeuginformationen repräsentierten aktuellen Position des ersten Zugfahrzeugs zur Startposition des ersten Abschnitts und (ii) von der Startposition des ersten Abschnitts entlang der Transportroute bis zur Endposition des ersten Abschnitts der Transportroute und (iii) von der Endposition des ersten Abschnitts der Transportroute zum ersten Ladepunkt zurückzulegen, ohne dass die Batterie des ersten Zugfahrzeugs aufgeladen werden muss.

In beispielhaften Ausführungsformen umfasst das offenbarte Verfahren ferner:
- Erhalten von zweiten Zugfahrzeuginformationen, wobei die zweiten Zugfahrzeuginformationen, zumindest für ein zweites Zugfahrzeug der Mehrzahl von Zugfahrzeugen, eine aktuelle Position des jeweiligen Zugfahrzeugs und eine geschätzte aktuelle Reichweite des jeweiligen Zugfahrzeugs repräsentiert,
- Bestimmen des zweiten Zugfahrzeugs aus der Mehrzahl von Zugfahrzeugen, um mit dem Anhänger ein zweites Zuggespann zum Transport der Waren entlang eines zweiten Abschnitts der Transportroute zu bilden, wobei das Bestimmen des zweiten Zugfahrzeugs aus der Mehrzahl von Zugfahrzeugen unter Berücksichtigung der ersten Transportauftraginformation und der zweiten Zugfahrzeuginformationen erfolgt.

Das Erhalten von zweiten Zugfahrzeuginformationen und das Bestimmen des zweiten Zugfahrzeugs aus der Mehrzahl von Zugfahrzeugen erfolgt beispielsweise nach dem Bestimmen des ersten Zugfahrzeugs aus der Mehrzahl von Zugfahrzeugen.

Zum Beispiel erfolgen das Erhalten von zweiten Zugfahrzeuginformationen und das Bestimmen des zweiten Zugfahrzeugs aus der Mehrzahl von Zugfahrzeugen während sich das erste Zuggespann entlang der Transportroute und/oder des ersten Abschnitts der Transportroute bewegt. Dies kann insbesondere dann der Fall sein, wenn sich die Transportroute und/oder der erste Abschnitt der Transportroute verändert, z.B. weil die tatsächliche Reichweite des ersten Zugfahrzeugs geringer ist als die durch die ersten Zugfahrzeuginformationen repräsentierte geschätzte aktuelle Reichweite des ersten Zugfahrzeugs, und/oder wenn eine durch die zweiten Zugfahrzeuginformationen repräsentierte geschätzte aktuelle Reichweite des ersten Zugfahrzeugs unterhalb einer vorgegebenen Mindestreichweite liegt.

Die zweiten Zugfahrzeuginformationen umfassen zumindest eine Zugfahrzeuginformation für das zweite Zugfahrzeug der Mehrzahl von Zugfahrzeugen. Ferner können die zweiten Zugfahrzeuginformationen eine Zugfahrzeuginformation für das erste Zugfahrzeug der Mehrzahl von Zugfahrzeugen umfassen.

Wie oben offenbart kann jedes der Zugfahrzeuge der Mehrzahl von Zugfahrzeugen eingerichtet sein, eine jeweilige Zugfahrzeuginformation (z.B. in regelmäßigen Zeitabständen und/oder zu vorgegebenen Zeitpunkten) bereitzustellen (z.B. zu erzeugen und an die Vorrichtung(en), die das offenbarte Verfahren ausführen, zu senden). Dementsprechend können die zweiten Zugfahrzeuginformationen für jedes der Zugfahrzeuge der Mehrzahl von Zugfahrzeugen eine jeweilige Zugfahrzeuginformation, die die aktuelle Position des jeweiligen Zugfahrzeugs und die geschätzte aktuelle Reichweite des jeweiligen Zugfahrzeugs repräsentiert, umfassen. Dabei können die zweiten Zugfahrzeuginformationen zu einem späteren Zeitpunkt als die ersten Zugfahrzeuginformationen bereitgestellt werden.

Unter dem Bestimmen des zweiten Zugfahrzeugs aus der Mehrzahl von Zugfahrzeugen soll beispielsweise verstanden werden, dass das zweite Zugfahrzeug aus der Mehrzahl von Zugfahrzeugen ausgewählt wird, um mit dem Anhänger das zweite Zuggespann zum Transport der Waren entlang des zweiten Abschnitts der Transportroute zu bilden. Dabei ist der Anhänger des ersten Zuggespanns und des zweiten Zuggespanns identisch.

Das Bestimmen des zweiten Zugfahrzeugs aus der Mehrzahl von Zugfahrzeugen soll unter Berücksichtigung der ersten Transportauftraginformation und der zweiten Zugfahrzeuginformationen erfolgen. Dabei kann das zweite Zugfahrzeug derart bestimmt werden, dass vorgegebene Kriterien erfüllt und/oder im Vergleich zu anderen Zugfahrzeugen der Mehrzahl von Zugfahrzeugen optimiert sind. Beispiele für diese Kriterien sind (i) eine Distanz zwischen der Endposition des ersten Abschnitts der Transportroute und der durch die zweiten Zugfahrzeuginformationen repräsentierten aktuellen Position des zweiten Zugfahrzeugs und/oder (ii) die durch die zweiten Zugfahrzeuginformationen repräsentierte geschätzte aktuelle Reichweite des zweiten Zugfahrzeugs und/oder (iii) eine Distanz zwischen der durch die zweiten Zugfahrzeuginformationen repräsentierten aktuellen Position des ersten Zugfahrzeugs und der durch die zweiten Zugfahrzeuginformationen repräsentierten aktuellen Position des zweiten Zugfahrzeugs.

Der zweite Abschnitt der Transportroute startet beispielsweise an der Endposition des ersten Abschnitts der Transportroute, d.h. die Endposition des ersten Abschnitts der Transportroute entspricht der Startposition des zweiten Abschnitts. Dementsprechend kann es vorteilhaft sein, die Distanz zwischen der Endposition des ersten Abschnitts und der durch die zweiten Zugfahrzeuginformationen repräsentierten aktuellen Position des zweiten Zugfahrzeugs beim Bestimmen des zweiten Zugfahrzeugs aus der Mehrzahl von Zugfahrzeugen zu minimieren, z.B. um den Energieverbrauch zu minimieren. Dabei soll unter der Distanz zwischen der aktuellen Position des zweiten Zugfahrzeugs und der Endposition des ersten Abschnitts der Transportroute beispielsweise die Länge einer Route (z.B. der kürzesten oder schnellsten Route) zwischen der aktuellen Position des zweiten Zugfahrzeugs und der Endposition des ersten Abschnitts der Transportroute verstanden werden.

Alternativ oder zusätzlich kann es vorteilhaft sein, die Distanz die das zweite Zugfahrzeug auf der Transportroute zurücklegen kann, ohne dass die Batterie des zweiten Zugfahrzeugs aufgeladen werden muss, beim Bestimmen des zweiten Zugfahrzeugs aus der Mehrzahl von Zugfahrzeugen zu maximieren, z.B. um die Transportzeit zu minimieren. Die Distanz die das zweite Zugfahrzeug auf der Transportroute zurücklegen kann, ohne dass die Batterie des zweiten Zugfahrzeugs aufgeladen werden muss, kann beispielsweise basierend auf der durch die zweiten Zugfahrzeuginformationen repräsentierten geschätzten aktuellen Reichweite des zweiten Zugfahrzeugs bestimmt werden. Zum Beispiel entspricht die Distanz die das zweite Zugfahrzeug auf der Transportroute zurücklegen kann, ohne dass die Batterie des zweiten Zugfahrzeugs aufgeladen werden muss, der durch die zweiten Zugfahrzeuginformationen repräsentierten geschätzten aktuellen Reichweite des zweiten Zugfahrzeugs abzüglich der Distanz zwischen der Endposition des ersten Abschnitts und der durch die zweiten Zugfahrzeuginformationen repräsentierten aktuellen Position des zweiten Zugfahrzeugs.

Alternativ oder zusätzlich kann es vorteilhaft sein, die Distanz zwischen der durch die zweiten Zugfahrzeuginformationen repräsentierten aktuellen Position des ersten Zugfahrzeugs und der durch die zweiten Zugfahrzeuginformationen repräsentierten aktuellen Position des zweiten Zugfahrzeugs beim Bestimmen des zweiten Zugfahrzeugs aus der Mehrzahl von Zugfahrzeugen zu minimieren, z.B. um den Energieverbrauch zu minimieren. Dies gilt insbesondere dann, wenn das Bestimmen des zweiten Zugfahrzeugs erfolgt, weil die durch die zweiten Zugfahrzeuginformationen repräsentierte geschätzte aktuelle Reichweite des ersten Zugfahrzeugs unterhalb einer vorgegebenen Mindestreichweite liegt. Dabei soll unter der Distanz zwischen der aktuellen Position des zweiten Zugfahrzeugs und der aktuellen Position des ersten Zugfahrzeugs beispielsweise die Länge einer Route (z.B. der kürzesten oder schnellsten Route) zwischen der aktuellen Position des zweiten Zugfahrzeugs und der aktuellen Position des ersten Zugfahrzeugs verstanden werden.

Zum Beispiel löst sich das erste Zuggespann auf (z.B. indem die Verbindung zwischen dem ersten Zugfahrzeug und dem Anhänger gelöst wird) bevor sich das zweite Zuggespann bildet. Anschließend kann sich das erste Zugfahrzeug beispielsweise zu einem Ladepunkt bewegen und/oder mit dem Ladepunkt verbinden, um seine Batterie aufzuladen.

Durch das Bestimmen des zweiten Zugfahrzeugs ist es möglich, zu vermeiden, dass sich die Transportdauer um die Zeit für das Aufladen der Batterie des ersten Zugfahrzeugs verlängert. Stattdessen wird das erste Zugfahrzeug gegen das zweite Zugfahrzeug ausgetauscht.

In beispielhaften Ausführungsformen umfasst das Bestimmen des zweiten Zugfahrzeugs aus der Mehrzahl von Zugfahrzeugen das Bestimmen des zweiten Abschnitts der Transportroute und/oder der Transportroute. Dabei soll unter dem Bestimmen der Transportroute beispielsweise auch das erneute Bestimmen (z.B. Aktualisieren) der Transportroute verstanden werden, falls diese zuvor bereits bestimmt wurde.

Zum Beispiel verläuft die Transportroute von der Beladeposition zur Entladeposition. Zum Beispiel kann die Transportroute von der Beladeposition zur Entladeposition gemäß vorgegebenen Regeln wie einem Algorithmus (z.B. einem vorgegebenen Routenalgorithmus, z.B. einem Routenalgorithmus zum Bestimmen der schnellsten oder kürzesten Route), (z.B. erneut) bestimmt (z.B. aktualisiert) werden.

Zum Beispiel entspricht die Startposition des zweiten Abschnitts der Transportroute der Endposition des ersten Abschnitts der Transportroute und die Endposition des zweiten Abschnitts befindet sich beispielsweise an einem zweiten Ladepunkt oder in der Nähe (z.B. in einem Umreis von weniger als 20 km, 10 km oder 5km) des zweiten Ladepunktes, wobei der zweite Ladepunkt eingerichtet ist, mit dem zweiten Zugfahrzeug verbunden zu werden, um die Batterie des zweiten Zugfahrzeugs aufzuladen. Zum Beispiel kann der zweite Abschnitt der Transportroute derart (z.B. gemäß vorgegebenen Regeln wie einem Algorithmus, z.B. einem Routenalgorithmus) bestimmt werden, dass die durch die zweite Zugfahrzeuginformationen repräsentierte geschätzte aktuelle Reichweite des zweiten Zugfahrzeugs (z.B. mit einer vorgegebenen Mindestwahrscheinlichkeit) ausreicht, um eine Distanz (i) von der der durch die zweiten Zugfahrzeuginformationen repräsentierten aktuelle Position des zweiten Zugfahrzeugs zur Startposition des zweiten Abschnitts und (ii) von der Startposition des zweiten Abschnitts entlang der Transportroute bis zur Endposition des zweiten Abschnitts der Transportroute und (iii) von der Endposition des zweiten Abschnitts der Transportroute zum zweiten Ladepunkt zurückzulegen, ohne dass die Batterie des zweiten Zugfahrzeugs aufgeladen werden muss.

In beispielhaften Ausführungsformen repräsentiert die erste Transportauftraginformation ferner:
- einen Beladezeitpunkt und/oder Beladezeitraum; und/oder
- einen Entladezeitpunkt und/oder Entladezeitraum; und/oder
- eine Verderblichkeit und/oder Haltbarkeit und/oder Lagerbarkeit der Waren; und/oder
- einen Priorisierungswert für den Transport der Waren von der Beladeposition zu der Entladeposition.

Der Beladezeitpunkt beschreibt beispielsweise den Zeitpunkt, bis zu dem der Anhänger an der Beladeposition mit den Waren an der Beladeposition beladen werden soll und/oder das erste Zuggespann die erste Beladeposition (z.B. entlang der Transportroute in Richtung der Entladeposition) verlassen haben soll; und der Beladezeitraum beschreibt beispielsweise den Zeitraum, in dem der Anhänger an der Beladeposition mit den Waren an der Beladeposition beladen werden soll und/oder das erste Zuggespann die erste Beladeposition (z.B. entlang der Transportroute in Richtung der Entladeposition) verlassen haben soll. Zum Beispiel stehen die Waren an der Beladeposition bis zum Beladezeitpunkt und/oder im Beladezeitraum zum Beladen bereit (z.B. im Rahmen eines automatisierten Beladeprozesses).

Der Entladezeitpunkt beschreibt beispielsweise den Zeitpunkt, bis zu dem ein Zuggespann mit dem Anhänger (z.B. das zweite Zuggespann) an der Entladeposition eintreffen soll und/oder die Waren von dem Anhänger an der Entladeposition entladen werden soll; und der Entladezeitraum beschreibt beispielsweise den Zeitraum, in dem ein Zuggespann mit dem Anhänger (z.B. das zweite Zuggespann) an der Entladeposition eintreffen und/oder die Waren von dem Anhänger an der Entladeposition entladen werden sollen. Zum Beispiel werden die Waren an der Entladeposition bis zum Entladezeitpunkt und/oder im Entladezeitraum erwartet, (z.B. um anschließend im Rahmen eines automatisierten Entlade- und/oder Weiterverarbeitungsprozesses entladen und/oder weiterverarbeitet zu werden).

Die Angabe des Beladezeitpunkts/Beladezeitraums und/oder des Entladezeitpunkts/Entladezeitraums ist beispielsweise vorteilhaft, um diese beim Bestimmen des ersten und/oder zweiten Zugfahrzeugs berücksichtigen zu können, so dass Abweichungen hiervon möglichst vermieden werden.

Die Verderblichkeit und/oder Haltbarkeit und/oder Lagerbarkeit der Waren kann beispielsweise in Form eines maximalen Transportzeitraums angegeben werden. Ein solcher maximaler Transportzeitraum beschreibt beispielsweise eine maximale Dauer für den Transport von der Beladeposition zu der Entladeposition. Wenn diese maximale Dauer nicht überschritten wird, wird beispielsweise davon ausgegangen, dass die Waren während des Transports nicht verdorben sind und/oder der Transport keinen unerwünschten negativen Einfluss auf die Haltbarkeit und/oder Lagerbarkeit der Waren hat. Es versteht sich, dass auch verschiedene maximale Transportzeiträume für verschiedene Transportbedingungen (z.B. für verschiedene Sensorinformationen wie Laderaumtemperatur) und/oder Mindesttransportbedingungen (z.B. in Form von unteren und/oder oberen Grenzwerten für bestimmte Sensorinformationen wie Laderaumtemperatur) angegeben werden können. Dies ist beispielsweise vorteilhaft, um die Verderblichkeit und/oder Haltbarkeit und/oder Lagerbarkeit der Waren beim Bestimmen des ersten und/oder zweiten Zugfahrzeugs berücksichtigen zu können.

Der Priorisierungswert für den Transport der Waren von der Beladeposition zu der Entladeposition beschreiben beispielsweise eine Priorisierung des ersten Transportauftrags für den Transport der Waren von der Beladeposition zu der Entladeposition im Vergleich zu konkurrierenden Transportaufträgen. Der durch die erste Transportauftraginformation repräsentierte Priorisierungswert für den Transport der Waren wird beispielsweise durch den Auftraggeber vorgegeben. Dies ist beispielsweise vorteilhaft, um Konflikte beim Bestimmen eines Zugfahrzeugs lösen zu können, wenn zur Erfüllung konkurrierender Transportaufträge das gleiche Zugfahrzeug in Frage kommt. Zum Beispiel kann der Priorisierungswert lediglich zwei Werte annehmen, nämlich priorisiert und nicht priorisiert. Es ist jedoch auch denkbar, dass der Priorisierungswert verschiedene Werte auf einer Priorisierungsskala (z.B. von 1 (keine Priorisierung) bis 5 (hohe) Priorisierung)) annehmen kann.

Der Beladezeitpunkt/Beladezeitraum und/oder der Entladezeitpunkt/Entladezeitraum und/oder die Verderblichkeit und/oder Haltbarkeit und/oder Lagerbarkeit der Waren in Form eines maximalen Transportzeitraums kann/können beim Bestimmen des ersten und/oder zweiten Zugfahrzeugs berücksichtigt werden. Zum Beispiel kann ein Zugfahrzeug als erstes und/oder zweites Zugfahrzeug bestimmt werden, das beispielsweise nicht sofort zur Verfügung steht (z.B. weil es weiter entfernt ist und/oder dessen Batterie noch weiter aufgeladen werden muss), wenn die damit einhergehende Verzögerung dem Transport der Waren von der Beladeposition zur Entladeposition in dem durch den Beladezeitpunkt/Beladezeitraum und dem Entladezeitpunkt/Entladezeitraum beschriebenen Zeitraum für den Transport der jeweiligen Waren entlang der jeweiligen Transportroute nicht entgegensteht und/oder wenn die Dauer des Transports der Waren dadurch nicht den maximalen Transportzeitraum überschreitet.

In beispielhaften Ausführungsformen wird ein Priorisierungswert für den Transport der Waren von der Beladeposition zu der Entladeposition unter Berücksichtigung einer Sensorinformation bestimmt, wobei die Sensorinformation einen durch einen Sensor des Anhängers erfassten Parameter, insbesondere einen für einen aktuell und/oder zukünftig erwarteten Warenzustand charakteristischen durch den Sensor des Anhänger erfassten Parameter, repräsentiert.

Wie oben offenbart, beschreibt der Priorisierungswert für den Transport der Waren von der Beladeposition zu der Entladeposition beispielsweise eine Priorisierung des ersten Transportauftrags für den Transport der Waren von der Beladeposition zu der Entladeposition im Vergleich zu konkurrierenden Transportaufträgen. Zum Beispiel kann der Priorisierungswert lediglich zwei Werte annehmen, nämlich priorisiert und nicht priorisiert. Es ist jedoch auch denkbar, dass der Priorisierungswert verschiedene Werte auf einer Priorisierungsskala (z.B. von 1 (keine Priorisierung) bis 5 (hohe) Priorisierung)) annehmen kann.

Zum Beispiel kann für die Waren ein Parameterbereich vorgegeben sein, in dem sich der durch den Sensor erfasste Parameter befindet. Sobald der durch den Sensor erfasste Parameter sich außerhalb dieses für die Waren vorgegebenen Parameterbereich befindet, wird beispielsweise davon ausgegangen, dass der aktuelle und/oder zukünftige erwartete Warenzustand sich verschlechtern wird. Dementsprechend kann der Priorisierungswert in diesem Fall (d.h. wenn der durch den Sensor erfasste Parameter außerhalb des für die Waren vorgegebenen Parameterbereichs liegt) derart bestimmt werden, dass der Transport der Waren von der Beladeposition zu der Entladeposition, d.h. der erste Transportauftrag gegenüber anderen konkurrierenden Transportaufträgen priorisiert wird.

Ein für einen aktuellen und/oder zukünftig erwarteten Warenzustand charakteristischer durch den Sensor des Anhänger erfasster Parameter ist beispielsweise eine Laderaumtemperatur (z.B. für Kühlwaren) und/oder eine Gaskonzentration (z.B. eine Ethylengaskonzentration für Obst- oder Gemüsewaren). Für Kühlwaren kann z.B. ein Laderaumtemperaturbereich vorgegeben werden, bei dessen Überschreitung die Kühlwaren schneller verderben, so dass sich der zukünftig erwartete Warenzustand verschlechtert. Gleichermaßen kann eine Überschreitung eines vorgegebenen Ethylengaskonzentrationsbereichs für Obst- oder Gemüsewaren auf eine unerwünschte schnellere Reifung der Obst- oder Gemüsewaren hindeuten, so dass sich der zukünftig erwartete Warenzustand verschlechtert. Um der Verschlechterung des zukünftigen Warenzustands entgegenzuwirken, kann der Priorisierungswert in diesen Fällen derart bestimmt werden, dass der Transport der Waren von der Beladeposition zu der Entladeposition, d.h. der erste Transportauftrag gegenüber anderen konkurrierenden Transportaufträgen priorisiert wird.

Dementsprechend kann das Verfahren zumindest einen der folgenden Schritte umfasst:
- Erfassen und/oder Erhalten der Sensorinformation; und/oder
- Bestimmen des Rriorisierungswerts für den Transport der Waren von der Beladeposition zu der Entladeposition.

Das Bestimmen des ersten und/oder zweiten Zugfahrzeugs kann unter Berücksichtigung des Priorisierungswerts für den Transport der Waren von der Beladeposition zu der Entladeposition erfolgen.

Zum Beispiel kann die erste Transportauftraginformation Teil einer Mehrzahl von Transportauftraginformationen konkurrierender Transportaufträge sein. Dabei sollen Transportaufträge beispielsweise als konkurrierend verstanden werden, wenn zur Erfüllung der Transportaufträge das gleiche Zugfahrzeug in Frage kommt und/oder wenn die durch die jeweiligen Transportauftraginformationen der konkurrierenden Transportaufträge repräsentierten Beladezeitpunkte/Beladezeiträume und Entladezeitpunkte/Entladezeiträume sich teilweise überlappende Zeiträume für den Transport der jeweiligen Waren entlang der jeweiligen Transportroute beschreiben.

Jede dieser Transportauftraginformationen der Mehrzahl von Transportauftraginformationen konkurrierender Transportaufträge kann beispielsweise einen jeweiligen Priorisierungswert repräsentieren. Alternativ oder zusätzlich kann auch für jeden der konkurrierenden Transportaufträge ein jeweiliger Priorisierungswert bestimmt werden.

Ferner kann das Bestimmen des ersten und/oder zweiten Zugfahrzeugs unter Berücksichtigung (i) der durch die Mehrzahl von Transportauftraginformationen konkurrierender Transportaufträge repräsentierten Priorisierungswerte und/oder (ii) die jeweiligen für die konkurrierenden Transportaufträge bestimmten Priorisierungswerte sein. Zum Beispiel kann das Bestimmen des ersten und/oder zweiten Zugahrzeugs gemäß einen Auktionsalgorithmus erfolgen, der auf den Priorisierungswerten basiert. Zum Beispiel kann der Auktionsalgorithmus die Priorisierungswerte als Eingangswerte erhalten.

In beispielhaften Ausführungsformen umfasst das System ferner eine Mehrzahl von Ladepunkten eines Energieversorgungsnetzes, wobei jedes Zugfahrzeug der Mehrzahl von Zugfahrzeugen eine jeweilige Batterie aufweist, und wobei jeder Ladepunkt der Mehrzahl von Ladepunkten eingerichtet ist, mit einem jeweiligen Zugfahrzeug der Mehrzahl von Zugfahrzeugen verbunden zu werden, um die jeweilige Batterie des jeweiligen Zugfahrzeugs aufzuladen. Zu diesem Zweck unterstützen die Ladepunkte einen oder mehrere Ladestandards wie Combined Charging System (CCS), Megawatt Charging System (MCS) und/oder CHAdeMO. Die Spezifikation und Verbreitung des CCS-Ladestandards wird durch CharIN e. V. gefördert und kann derzeit unter https://www.charin.global/ abgerufen werden. Ferner unterstützt CharIN e. V. die Entwicklung einer Spezifikation des MCS-Ladestandards. Der CHAdeMO Ladestandard wird durch die CHAdeMO Association gefördert und kann derzeit unter https://www.chademo.com/ abgerufen werden.

Zum Beispiel können sich die Ladepunkte zumindest teilweise an unterschiedlichen geographischen Positionen befinden. Beim Bestimmen des ersten und/oder zweiten Zugfahrzeugs können die Ladepunkte der Mehrzahl von Ladepunkten und/oder deren geographischen Positionen berücksichtigt werden. Wie oben offenbart, können der erste Abschnitt und der zweite Abschnitt der Transportroute derart bestimmt werden, dass sich die Endposition des ersten Abschnitts an einem ersten Ladepunkt (d.h. die Endposition des ersten Abschnitts entspricht der geographische Position des ersten Ladepunktes) oder in der Nähe (z.B. in einem Umreis von weniger als 20 km, 10 km oder 5km um die geographische Position) des ersten Ladepunktes und die Endposition des zweiten Abschnitts an einem zweiten Ladepunkt (d.h. die Endposition des zweiten Abschnitts entspricht der geographische Position des zweiten Ladepunktes) oder in der Nähe (z.B. in einem Umreis von weniger als 20 km, 10 km oder 5km um die geographische Position) des zweiten Ladepunktes befindet. Dies ist insbesondere vorteilhaft, um ein Laden der Batterie des ersten Zugfahrzeugs durch den ersten Ladepunkt und ein Laden der Batterie des zweiten Zugfahrzeugs am zweiten Ladepunkt zu ermöglichen.

Ferner können zumindest einige Zugfahrzeuge (z.B. jedes Zugfahrzeug) der Mehrzahl von Zugfahrzeugen eingerichtet sein, dem Energieversorgungsnetz seine jeweilige Batterie zur Nutzung als Energiespeicher Verfügung zu stellen, wenn das jeweilige Zugfahrzeug mit einem jeweiligen Ladepunkt der Mehrzahl von Ladepunkten verbunden ist. Zu diesem Zweck unterstützen die jeweiligen Zugfahrzeuge der Mehrzahl von Zugfahrzeugen und die jeweiligen Ladepunkte der Mehrzahl von Ladepunkten jeweils sogenanntes bidirektionales Laden, d.h. zum einen das Laden der Batterie des jeweiligen Zugfahrzeugs mit elektrischer Energie aus dem mit dem jeweiligen Ladepunkt verbundenen Energieversorgungsnetz und zum anderen das Zurückspeisen von in der Batterie des jeweiligen Zugfahrzeugs gespeicherter elektrischer Energie in das mit dem jeweiligen Ladepunkt verbundenen Energieversorgungsnetz. Die Kommunikation für Bidirektionales Laden ist beispielsweise in dem ISO 15118 Standard der International Electrotechnical Commission normiert.

Durch bidirektionales Laden kann die Batterie eines jeweiligen Zugfahrzeugs, das mit einem jeweiligen Ladepunkt verbunden ist, als flexibler Energiespeicher für das Energieversorgungsnetz verwendet werden. Dies ist beispielsweise vorteilhaft, um an dem jeweiligen Ladepunkt regenerativ erzeugte elektrische Energie (z.B. durch eine Windkraftanlage und/oder eine Photovoltaikanlage) zwischenzuspeichern und bei Bedarf (z.B. zu Spitzen- oder Höchstlastzeiten) dem Energieversorgungsnetz bereitzustellen. Um dies beim Bestimmen des ersten und/oder zweiten Zugfahrzeugs berücksichtigen zu können, kann das Verfahren ferner umfassen:
- Erhalten von ersten Energiespeicherbedarfsinformationen, wobei die ersten Energiespeicherbedarfsinformationen, zumindest für einen ersten Ladepunkt der Mehrzahl von Ladepunkten, einen jeweiligen aktuellen und/oder geschätzten zukünftigen Bedarf zur Nutzung von Batterien der Mehrzahl von Zugfahrzeugen als Energiespeicher für das Energieversorgungsnetz an dem jeweiligen Ladepunkt repräsentiert, wobei der erste Ladepunkt mit dem ersten Zugfahrzeug verbunden ist, um die Batterie des ersten Zugfahrzeugs zu laden, und wobei das Bestimmen des ersten Zugfahrzeugs aus der Mehrzahl von Zugfahrzeugen ferner unter Berücksichtigung der ersten Energiespeicherbedarfsinformationen erfolgt; und/oder
- Erhalten von zweiten Energiespeicherbedarfsinformationen, wobei die zweiten Energiespeicherbedarfsinformationen, zumindest für einen zweiten Ladepunkt der Mehrzahl von Ladepunkten, einen jeweiligen aktuellen und/oder geschätzten zukünftigen Bedarf zur Nutzung von Batterien der Mehrzahl von Zugfahrzeugen als Energiespeicher für das Energieversorgungsnetz an dem jeweiligen Ladepunkt repräsentiert, wobei der zweite Ladepunkt mit dem zweiten Zugfahrzeug verbunden ist, um die Batterie des zweiten Zugfahrzeugs zu laden, und wobei das Bestimmen des zweiten Zugfahrzeugs aus der Mehrzahl von Zugfahrzeugen ferner unter Berücksichtigung der zweiten Energiespeicherbedarfsinformationen erfolgt.

Die ersten Energiespeicherbedarfsinformationen werden beispielsweise vor dem Bestimmen des ersten Zugfahrzeugs erhalten, und die zweiten Energiespeicherbedarfsinformationen werden beispielsweise vor dem Bestimmen des zweiten Zugfahrzeugs erhalten. Zum Beispiel ist das erste Zugfahrzeug beim Bestimmen des ersten Zugfahrzeugs mit dem ersten Ladepunkt verbunden und das zweite Zugfahrzeug ist beim Bestimmen des zweiten Zugfahrzeugs mit dem zweiten Ladepunkt verbunden.

Zum Beispiel umfasst die Repräsentation des aktuellen und/oder geschätzten zukünftige Bedarfs zur Nutzung von Batterien der Mehrzahl von Zugfahrzeugen als Energiespeicher an dem jeweiligen Ladepunkt durch die ersten und/oder zweiten Energiespeicherbedarfsinformationen eine Energiespeicherkapazitätsangabe und eine Zeitangabe, insbesondere eine Zeitraumangabe, umfasst. Die Energiespeicherkapazitätsangabe gibt beispielsweise an, welche Energiespeicherkapazität an dem jeweiligen Ladepunkt benötigt wird, und die Zeitangabe gibt beispielsweise an, in welchen Zeitraum diese Energiespeicherkapazität benötigt wird.

Alternativ oder zusätzlich können die ersten Energiespeicherbedarfsinformationen einen Priorisierungswert für den Bedarf zur Nutzung von Batterien der Mehrzahl von Zugfahrzeugen als Energiespeicher an dem ersten Ladepunkt repräsentieren, und/oder die zweiten Energiespeicherbedarfsinformationen können einen Priorisierungswert für den Bedarf zur Nutzung von Batterien der Mehrzahl von Zugfahrzeugen als Energiespeicher an dem zweiten Ladepunkt repräsentieren.

Wenn das erste Zugfahrzeug mit dem ersten Ladepunkt verbunden ist und die erste Energiespeicherbedarfsinformation beispielsweise eine derzeit benötigte Energiespeicherkapazität, die durch ein anderes mit dem ersten Ladepunkt verbundenes Zugfahrzeug gedeckt werden kann, repräsentiert, steht dies dem Bestimmen des ersten Zugfahrzeugs aus der Mehrzahl von Zugfahrzeugen, um mit dem Anhänger das erste Zuggespann zum Transport der Waren entlang des ersten Abschnitts der Transportroute zu bilden, auch unter Berücksichtigung der ersten Energiespeicherbedarfsinformation beispielsweise nicht entgegen.

Dagegen kann es einen Konflikt geben, wenn kein anderes Zugsfahrzeug mit dem ersten Ladepunkt verbunden ist, um die derzeit benötigte Energiespeicherkapazität zu decken. Ein solcher Konflikt kann beispielsweise durch den Vergleich eines Priorisierungswerts für den Transportauftrag, der, wie oben offenbart, durch die erste Transportauftraginformation repräsentiert und/oder bestimmt werden kann, und den Priorisierungswert für den Bedarf zur Nutzung von Batterien der Mehrzahl von Zugfahrzeugen als Energiespeicher an dem ersten Ladepunkt gelöst werden. Wenn der Transportauftrag höher als der Bedarf zur Nutzung von Batterien der Mehrzahl von Zugfahrzeugen als Energiespeicher an dem ersten Ladepunkt priorisiert wird, wird trotzdem das erste Zugfahrzeug aus der Mehrzahl von Zugfahrzeugen bestimmt, um mit dem Anhänger ein erstes Zuggespann zum Transport der Waren entlang eines ersten Abschnitts einer Transportroute zu bilden.

In beispielhaften Ausführungsformen befinden sich die Zugfahrzeuge zumindest teilweise an unterschiedlichen geographischen Positionen.

In beispielhaften Ausführungsformen umfasst das Verfahren ferner:
- Bewirken, dass das erste Zugfahrzeug aus der Mehrzahl von Zugfahrzeugen mit dem Anhänger das erste Zuggespann zum Transport der Waren entlang des ersten Abschnitts der Transportroute bildet; und/oder
- Bewirken, dass das zweite Zugfahrzeug aus der Mehrzahl von Zugfahrzeugen mit dem Anhänger das zweite Zuggespann zum Transport der Waren entlang des zweiten Abschnitts der Transportroute bildet.

Dabei soll unter dem Bewirken beispielsweise verstanden werden, dass das erste Zugfahrzeug und/oder das zweite Zugfahrzeug entsprechend angesteuert werden, z.B. durch das Übermitteln einer Steuerinformation an das erste und/oder zweite Zugfahrzeug.

In beispielhaften Ausführungsformen werden die ersten und/oder zweiten Zugfahrzeuginformationen von dem Anhänger bereitgestellt. Zum Beispiel sendet der Anhänger die ersten und/oder zweiten Zugfahrzeuginformationen über eine Kommunikationsverbindung an einen Server (z.B. den Server, der das Verfahren ausführt).

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die Figuren sollen jedoch nur dem Zwecke der Verdeutlichung, nicht aber zur Bestimmung des Schutzbereiches der Erfindung dienen. Die Figuren sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a-c: eine schematische Darstellung einer beispielhaften Ausführungsform eines Systems gemäß der Erfindung;
- Fig. 2: eine schematische Darstellung einer Ausführungsform einer Servervorrichtung gemäß der Erfindung; und
- Fig. 3: ein Flussdiagramm einer Ausführungsform eines Verfahrens gemäß der Erfindung.

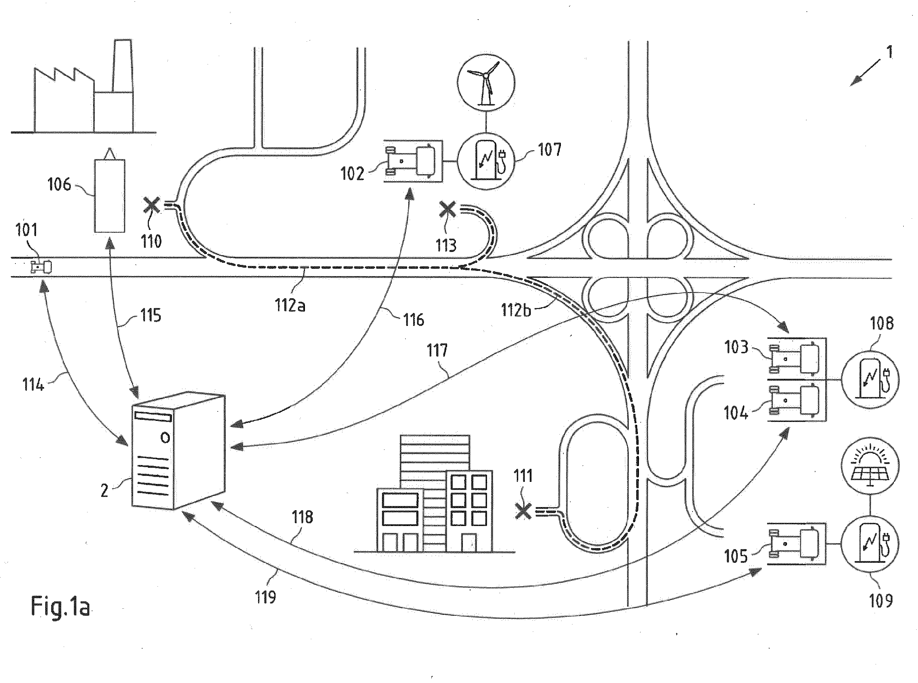

Fig. 1a-c sind eine schematische Darstellung einer beispielhaften Ausführungsform eines Systems 1 gemäß der Erfindung.

Das System 1 umfasst unter anderem eine Mehrzahl von elektrisch angetriebenen Zugfahrzeugen 101 bis 105. Jedes der Zugfahrzeuge 101 bis 105 weist eine Batterie zur Versorgung eines oder mehrerer Elektromotoren, die das jeweilige Zugfahrzeug antreiben, mit elektrischer Energie auf.

Die Zugfahrzeuge 101 bis 105 sind in Fig. 1a-c beispielhaft als teilautonome Zugfahrzeuge dargestellt. Dabei soll unter einem teilautonomen Zugfahrzeug verstanden werden, dass sich das jeweilige Zugfahrzeug selbsttätig entlang eines Teils einer jeweiligen vorgegebenen Route (z.B. der Transportroute 112a/b) bewegt. Beispielsweise kann jedes Zugfahrzeug dieses Teils der Mehrzahl von Zugfahrzeugen 101 bis 105 eingerichtet sein, sich in vorgegebenen Fahrsituationen wie bei geringen Geschwindigkeiten (z.B. Geschwindigkeiten nicht höher als 20 km/h oder 10 km/h oder 7 km/h) und/oder in bekannten Umgebungen (z.B. einem Betriebshof und/oder einem Güter/Containerumschlagplatz) und/oder in wenig komplexen Fahrsituationen (z.B. auf der Autobahn) selbsttätig zu bewegen und in anderen Fahrsituationen durch einen Fahrzeugführer (z.B. an einer entfernten Steuervorrichtung, in Fig. 1a-c nicht dargestellt) gesteuert zu werden. Zu diesem Zweck kann jedes Zugfahrzeug der Mehrzahl von Zugfahrzeugen 101 bis 105 jeweilige Steuermittel eingerichtet zum Steuern einer selbsttätigen Bewegung des jeweiligen Zugfahrzeugs umfassen, die eingerichtet sind, eine selbsttätige Bewegung des jeweiligen Zugfahrzeugs entlang eines Teils der jeweiligen vorgegebenen Route beispielsweise unter Berücksichtigung von Umgebungssensorinformationen zu steuern. Die jeweiligen Steuermittel können jeweils Hardware- und/oder Software-Komponenten umfassen. Die jeweiligen Steuermittel können beispielsweise jeweils mindestens einen Speicher mit Programmanweisungen eines Computerprogramms und mindestens einen Prozessor ausgebildet zum Ausführen von Programmanweisungen aus dem mindestens einen Speicher umfassen. Dementsprechend sollen insbesondere auch jeweilige Steuermittel als offenbart verstanden werden, die zumindest einen Prozessor und zumindest einen Speicher mit Programmanweisungen umfassen, wobei der zumindest eine Speicher und die Programmanweisungen eingerichtet sind, gemeinsam mit dem zumindest einen Prozessor das jeweilige Zugfahrzeug während des teilautonomen oder autonomen Fahrens zu steuern.

Ferner sind die Zugfahrzeuge 101 bis 105 beispielhaft als unbemannte Fahrzeuge dargestellt, die weder einen weder einen Fahrer noch einen oder mehrere Passagiere transportieren und/oder für den Transport eines Fahrers und eines oder mehrerer Passagiere eingerichtet sind. Zum Beispiel weist die Zugfahrzeuge 101 bis 105 keine Sitze für Fahrer und/oder Passagiere auf.

Die Zugfahrzeuge 101 bis 105 sind jeweils eingerichtet, mit einem jeweiligen Anhänger wie dem Anhänger 106 ein Zuggespann zu bilden und den jeweiligen Anhänger zu ziehen. Der Anhänger 106 ist in Fig. 1a-c beispielhaft als Sattelauflieger dargestellt. Solche Nutzfahrzeuganhänger sind insbesondere für den Transport von Gütern, vorzugsweise Stückgütern, im öffentlichen Straßenverkehr vorgesehen. Zu diesem Zweck weisen Nutzfahrzeuganhänger unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Damit der jeweilige Anhänger ein Zuggespann mit einem jeweiligen Zugfahrzeug bilden kann, weisen der jeweilige Anhänger und das jeweilige Zugfahrzeug beispielsweise jeweilige zueinander korrespondierende Verbindungsmittel auf, die eingerichtet sind, um eine Verbindung (z.B. eine mechanische und/oder elektrische Verbindung) zwischen dem jeweiligen Anhänger und dem jeweiligen Zugfahrzeug herzustellen.

Ferner umfasst das System 1 eine von den Zugfahrzeugen 101 bis 105 und dem Anhänger 106 entfernte Servervorrichtung 2.

Außerdem kann das System 1 eine Mehrzahl von Ladepunkten 107 bis 109 eines Energieversorgungsnetzes umfassen, wobei jeder Ladepunkt der Mehrzahl von Ladepunkten 107 bis 109 eingerichtet ist, mit einem jeweiligen Zugfahrzeug der Mehrzahl von Zugfahrzeugen 101 bis 105 verbunden zu werden, um die jeweilige Batterie des jeweiligen Zugfahrzeugs aufzuladen.

Es kann vorgesehen sein, dass zumindest einige Zugfahrzeuge der Mehrzahl von Zugfahrzeugen 101 bis 105 eingerichtet sind, dem Energieversorgungsnetz seine jeweilige Batterie zur Nutzung als Energiespeicher Verfügung zu stellen, wenn das jeweilige Zugfahrzeug mit einem jeweiligen Ladepunkt der Mehrzahl von Ladepunkten 107 bis 109 verbunden ist. Zu diesem Zweck können die jeweiligen Zugfahrzeuge der Mehrzahl von Zugfahrzeugen 101 bis 105 und die jeweiligen Ladepunkte der Mehrzahl von Ladepunkten 107 bis 109 jeweils sogenanntes bidirektionales Laden unterstützen, d.h. zum einen das Laden der Batterie des jeweiligen Zugfahrzeugs mit elektrischer Energie aus dem mit dem jeweiligen Ladepunkt verbundenen Energieversorgungsnetz und zum anderen das Zurückspeisen von in der Batterie des jeweiligen Zugfahrzeugs gespeicherter elektrischer Energie in das mit dem jeweiligen Ladepunkt verbundenen Energieversorgungsnetz.

Es versteht sich, dass das System 1 neben den Zugfahrzeugen 101 bis 105 weitere Zugfahrzeuge und neben dem Anhänger 106 weitere Anhänger (z.B. eine Mehrzahl von Anhängern) und neben den Ladepunkten 107 bis 109 weitere Ladepunkte umfassen kann.

Das System 1 ist beispielsweise ein System zum Transport von Waren. Zum Beispiel sollen Waren von einer Beladeposition 110 zu einer Entladeposition transportiert werden. Eine beispielhafte Transportroute 112a/b zum Transport der Waren von der Beladposition 110 zu der Entladeposition 111 ist in Fig. 1a-c ebenfalls dargestellt. Diese Transportroute 112a/b weist einen ersten Abschnitt 112a und einen zweiten Abschnitt 112b auf. Die Startposition des ersten Abschnitts 112a entspricht der Beladeposition 110 und die Endposition des ersten Abschnitts entspricht der geographische Position 113 des Ladepunkts 107; und die Startposition des zweiten Abschnitts 112b entspricht der geographische Position 113 des Ladepunkts 107, d.h. der Endposition des ersten Abschnitts 112a, und die Endposition des zweiten Abschnitts 112b entspricht der Entladeposition 111.

Die Servervorrichtung 2 kann über die Kommunikationsverbindungen 114 bis 119 mit den Zugfahrzeug 101 bis 105 und dem Anhänger 106 kommunizieren, z.B. Informationen über die jeweilige Kommunikationsverbindung empfangen und/oder senden. Zum Beispiel kann jede der Kommunikationsverbindungen 114 bis 119 eine jeweilige Verbindung über ein Mobilfunkkommunikationssystem wie ein 2G/3G/4G/5G-Kommunikationssystem umfassen. Die Spezifikationen der 2G, 3G, 4G oder 5G Mobilfunkkommunikationssysteme werden durch das 3rd Generation Partnership Project (3GPP) entwickelt und können derzeit im Internet unter https://www.3gpp.org/ abgerufen werden.

Es versteht sich, dass jede der Kommunikationsverbindungen 114 bis 119 neben der drahtlosen Verbindung über das Mobilfunkkommunikationssystem auch eine drahtgebundene Verbindung über ein drahtgebundenes Kommunikationsnetzwerk wie ein lokales Netzwerk (Engl: Local Area Network, LAN), ein Weitverkehrsnetzwerk (Engl: Wide Area Network) und/oder das Internet umfassen kann. Ein lokales Netzwerk ist beispielsweise ein Ethernet, das in den Standards der IEEE-802.3-Familie spezifiziert ist, die derzeit im Internet unter https://standards.ieee.org/ abrufbar sind. Der Informationsaustausch über die Kommunikationsverbindungen 114 bis 119 kann verschlüsselt erfolgen.

Zum Beispiel ist jedes der Zugfahrzeuge der Mehrzahl von Zugfahrzeugen 101 bis 105 eingerichtet, eine jeweilige Zugfahrzeuginformation (z.B. in regelmäßigen Zeitabständen und/oder zu vorgegebenen Zeitpunkten) zu erzeugen und über eine der Kommunikationsverbindungen 114 bis 119 an die Servervorrichtung 2 zu senden.

Die Fig. 1a-c unterscheiden sich dadurch, dass die Zugfahrzeuge 101 und 102 sowie der Anhänger 101 an unterschiedliche Positionen vor und während des Transports der Waren entlang der Transportroute 112a/b dargestellt sind.

Fig. 1a zeigt eine Situation vor dem Transport der Waren entlang der Transportroute 112a/b. In Fig. 1a befindet sich der Anhänger 106 bereits an der Beladeposition, aber das erste Zugfahrzeug 101 ist noch nicht an der Beladeposition angekommen, um mit dem Anhänger 106 ein Zuggespann zu bilden.

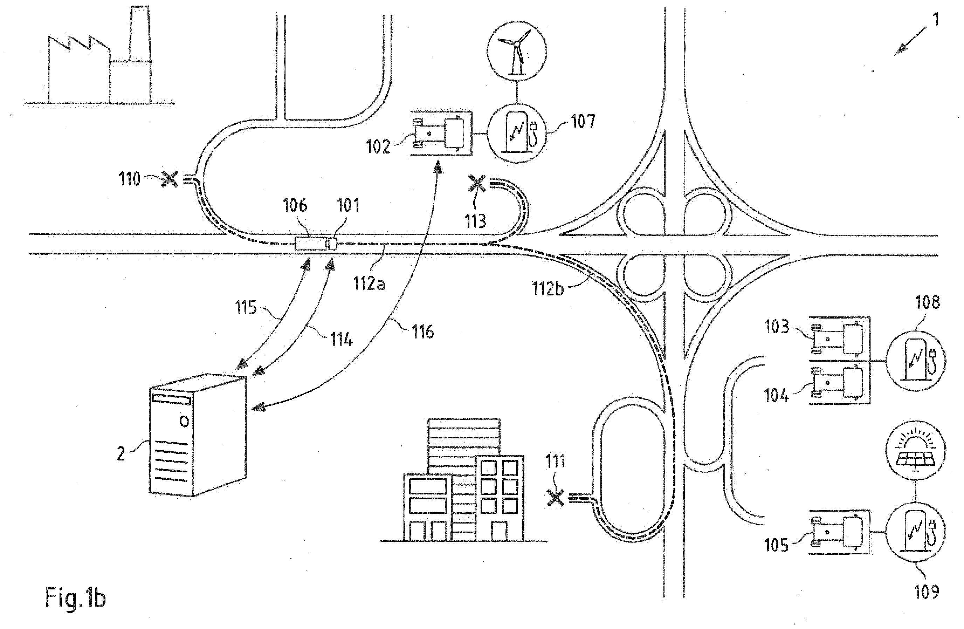

In Fig. 1b bilden das erste Zugfahrzeug 101 und der Anhänger 106 ein Zuggespann und bewegen sich zum Transport der Waren entlang des ersten Abschnitts 112a der Transportroute 112a/b.

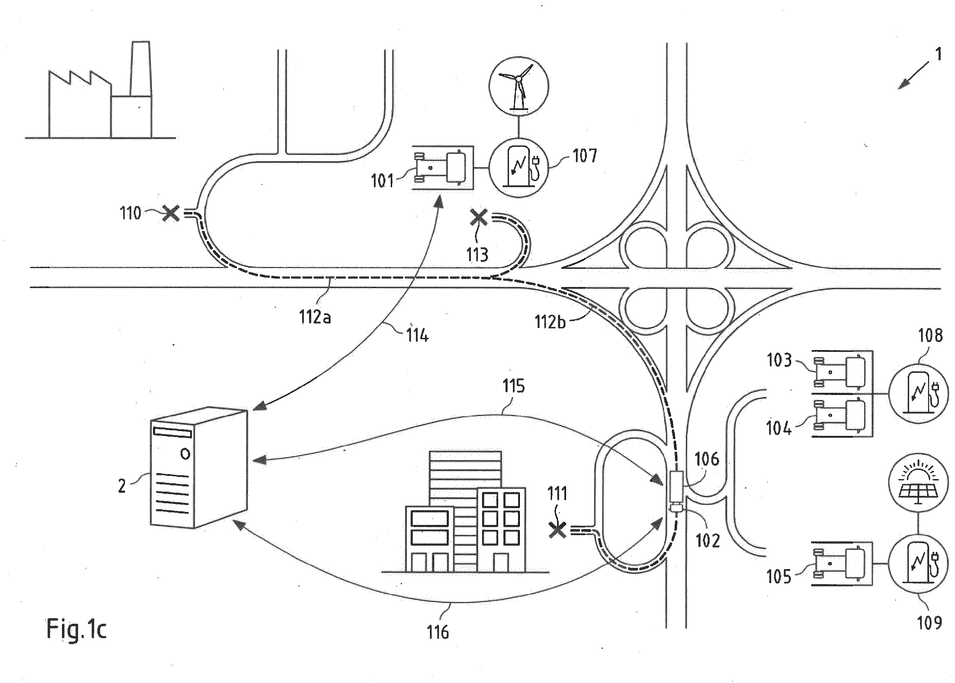

In Fig. 1c bildet das zweite Zugfahrzeug 102 und der Anhänger 106 ein Zuggespann und bewegen sich zum Transport der Waren entlang des zweiten Abschnitts 112b der Transportroute 112a/b.

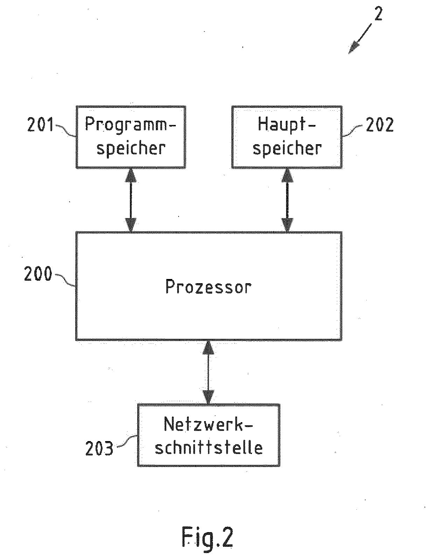

Fig. 2 zeigt eine schematische Darstellung einer Ausführungsform einer Servervorrichtung 2 gemäß der Erfindung. Im Folgenden wird beispielhaft davon ausgegangen, dass die Servervorrichtung 2 des in Fig. 1 dargestellten Systems 1 dieser in Fig. 2 dargestellten Servervorrichtung 2 entspricht.

Die Servervorrichtung umfasst einen Prozessor 200 und verbunden mit dem Prozessor 200 einen ersten Speicher als Programmspeicher 201, einen zweiten Speicher als Hauptspeicher 202 und eine Netzwerkschnittstelle 203.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Servervorrichtung 2 auch mehrere Prozessoren 200 umfassen kann.

Prozessor 200 führt Programmanweisungen aus, die in Programmspeicher 201 gespeichert sind, und speichert beispielsweise Zwischenergebnisse oder Ähnliches in Hauptspeicher 202. Die Verwendung eines (zusätzlichen) graphischen Prozessors kann beispielsweise zur Ausführung von Algorithmen zum maschinellen Lernen und/oder künstlichen neuronalen Netzwerken vorteilhaft sein.

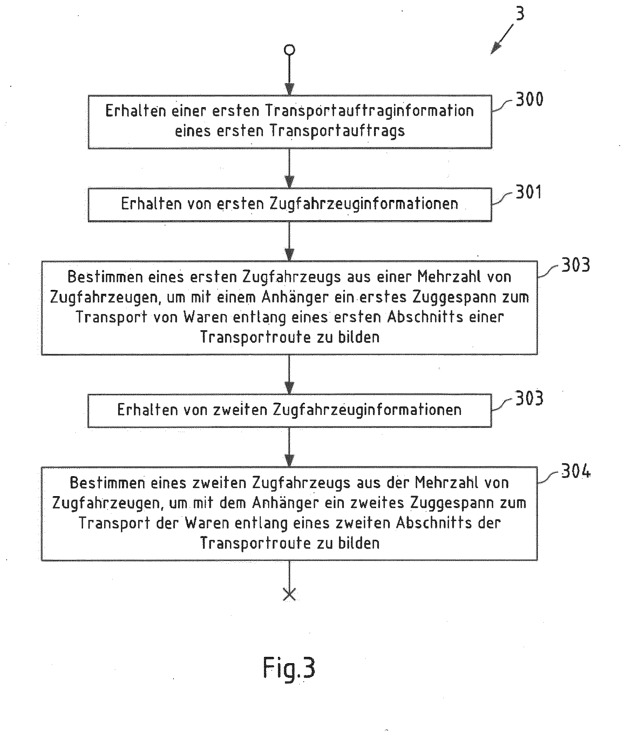

In Programmspeicher 201 sind beispielsweise Programmanweisungen gespeichert, die den Prozessor 200, wenn er die Programmanweisungen ausführt, veranlassen, das Verfahren gemäß der Erfindung (z.B. das Verfahren gemäß dem in Fig. 3 dargestellten Flussdiagramm 3) zumindest teilweise auszuführen und/oder zu steuern.

Programmspeicher 201 enthält ferner beispielsweise das Betriebssystem der Servervorrichtung 2, das beim Starten der Servervorrichtung 2 zumindest teilweise in Hauptspeicher 202 geladen und vom Prozessor 200 ausgeführt wird. Insbesondere wird beim Starten der Funkkommunikationsvorrichtung 2 zumindest ein Teil des Kerns des Betriebssystems in den Hauptspeicher 202 geladen und von Prozessor 200 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Servervorrichtung 2 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 202 und Programmspeicher 201 können auch als ein Speicher ausgebildet sein. Alternativ können Hauptspeicher 202 und/oder Programmspeicher 201 jeweils durch mehrere Speicher gebildet werden. Ferner können Hauptspeicher 202 und/oder Programmspeicher 201 auch Teil des Prozessors 200 sein.

Prozessor 200 steuert die Netzwerkschnittstelle 203, welche beispielsweise eingerichtet ist über eine Verbindung in einem Kommunikationsnetzwerk Informationen mit einer entfernten Vorrichtung auszutauschen (z.B. zu senden und/oder zu empfangen). Im Folgenden wird beispielhaft davon ausgegangen, dass die Netzwerkschnittstelle 203 eine drahtgebundene Netzwerkschnittstelle ist. Ein Beispiel für eine drahtgebundene Netzwerkschnittstelle ist eine Ethernet-Schnittstelle. Zum Beispiel kann die Servervorrichtung 2 die Netzwerkschnittstelle 203 verwenden, um Informationen (z.B. Zugfahrzeuginformationen) über die Kommunikationsverbindungen 115 bis 116 des in Fig. 1 dargestellten Systems 1 auszutauschen (z.B. zu senden und/oder zu empfangen).

Die Komponenten 200 bis 203 der Servervorrichtung 2 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Servervorrichtung 2 neben den Komponenten 200 bis 203 weitere Komponenten (z.B. eine Benutzerschnittstelle) umfassen kann.

Fig. 3 zeigt ein Flussdiagramm 3 einer Ausführungsform eines Verfahrens gemäß der Erfindung. Im Folgenden wird beispielhaft angenommen, dass die Schritte 300 bis 304 durch die Servervorrichtung 2 des in Fig. 1 dargestellten Systems 1 ausgeführt werden.

In einem Schritt 300 wird eine erste Transportauftraginformation eines ersten Transportauftrags erhalten, wobei die erste Transportauftraginformation die Beladeposition 110, an der der Anhänger 106 mit Waren beladen werden soll, und die Entladeposition 111, an der die Waren von dem Anhänger entladen werden sollen, repräsentiert.

Zum Beispiel stammt die erste Transportauftraginformation von der Servervorrichtung eines Auftraggebers, der das System 1 mit dem Transport der Waren von der Beladeposition 110 zu der Entladeposition 111 beauftrag. Zum Beispiel wird die erste Transportauftraginformationen im Schritt 300 durch die Servervorrichtung 2 über eine Kommunikationsverbindung von der Servervorrichtung des Auftraggebers empfangen.

In einem Schritt 301 werden erste Zugfahrzeuginformationen erhalten, wobei die ersten Zugfahrzeuginformationen, zumindest für das erste Zugfahrzeug 101 der Mehrzahl von Zugfahrzeugen 101 bis 105, eine aktuelle Position des jeweiligen Zugfahrzeugs und eine geschätzte aktuelle Reichweite des jeweiligen Zugfahrzeugs repräsentieren.

Wie oben offenbart, kann jedes der Zugfahrzeuge der Mehrzahl von Zugfahrzeugen 101 bis 105 eingerichtet sein, eine jeweilige Zugfahrzeuginformation (z.B. in regelmäßigen Zeitabständen und/oder zu vorgegebenen Zeitpunkten) zu erzeugen und über eine der Kommunikationsverbindungen 114 bis 119 an die Servervorrichtung 2 zu senden. Dementsprechend wird im Folgenden davon ausgegangen, dass die ersten Zugfahrzeuginformationen für jedes der Zugfahrzeuge der Mehrzahl von Zugfahrzeugen 101 bis 105 eine jeweilige Zugfahrzeuginformation, die die aktuelle Position des jeweiligen Zugfahrzeugs und die geschätzte aktuelle Reichweite des jeweiligen Zugfahrzeugs repräsentiert, umfassen. Zum Beispiel empfängt die Servervorrichtung 2 die ersten Zugfahrzeuginformationen in Schritt 301 über die Kommunikationsverbindungen 114, 116 bis 119 von den Zugfahrzeugen 101 bis 105.

Die durch die ersten Zugfahrzeuginformationen repräsentierte aktuelle Position des jeweiligen Zugfahrzeugs entspricht beispielsweise der zuletzt durch einen Positionssensor des jeweiligen Zugfahrzeugs erfassten Position des jeweiligen Zugfahrzeugs; und die durch die ersten Zugfahrzeuginformationen repräsentierte geschätzte aktuelle Reichweite des jeweiligen Zugfahrzeugs entspricht beispielsweise der Distanz, die das jeweilige Zugfahrzeug aufgrund der in der Batterie des jeweiligen Zugfahrzeugs aktuell gespeicherte elektrischen Energie zurücklegen kann, ohne dass die Batterie aufgeladen werden muss. Um die aktuelle Reichweite des jeweiligen Zugfahrzeugs zu schätzen, kann die in der Batterie des jeweiligen Zugfahrzeugs aktuell gespeicherte Energie zumindest teilweise basierend auf durch einen oder mehrere Batteriesensoren zuletzt erfasste(n) Parameter(n) wie die Batteriespannung bestimmt werden. Anschließend kann dann die Distanz, die das das jeweilige Zugfahrzeug zurücklegen kann, ohne dass die Batterie aufgeladen werden muss, basierend auf einem durchschnittlichen Energieverbrauch des jeweiligen Zugfahrzeugs (z.B. des durchschnittlichen Energieverbrauchs in einem vorgegebenen Zeitraum wie seit dem letzten Laden der Batterie öder auf den zuletzt zurückgelegten 500 km oder 250 km oder 100km) bestimmt werden.

In einem Schritt 302 wird das erste Zugfahrzeug 101 aus der Mehrzahl von Zugfahrzeugen 101 bis 105 bestimmt, um mit dem Anhänger 106 ein erstes Zuggespann zum Transport der Waren entlang des ersten Abschnitts 112a der Transportroute 112a/b zu bilden, wobei das Bestimmen des ersten Zugfahrzeugs 101 aus der Mehrzahl von Zugfahrzeugen 101 bis 105 unter Berücksichtigung der ersten Transportauftraginformation und der ersten Zugfahrzeuginformationen erfolgt.

Unter dem Bestimmen des ersten Zugfahrzeugs101 aus der Mehrzahl von Zugfahrzeugen 101 bis 105 soll beispielsweise verstanden werden, dass das erste Zugfahrzeug aus der Mehrzahl von Zugfahrzeugen ausgewählt wird, um mit dem Anhänger 106 ein erstes Zuggespann zum Transport der Waren entlang des ersten Abschnitts 112a der Transportroute 112a/b zu bilden. Zum Beispiel kann das erste Zugfahrzeug 101 derart bestimmt werden, dass vorgegebene Kriterien erfüllt und/oder im Vergleich zu anderen Zugfahrzeugen der Mehrzahl von Zugfahrzeugen 101 bis 105 optimiert sind. Beispiele für diese Kriterien sind (i) eine Distanz zwischen der durch die erste Transportauftraginformation repräsentierten Beladeposition und der durch die ersten Zugfahrzeuginformationen repräsentierten aktuellen Position des ersten Zugfahrzeugs und/oder (ii) die durch die ersten Zugfahrzeuginformationen repräsentierte geschätzte aktuelle Reichweite des ersten Zugfahrzeugs.

Der erste Abschnitt der Transportroute startet beispielsweise an der Beladeposition, d.h. die Beladeposition entspricht der Startposition des ersten Abschnitts der Transportroute. Dementsprechend kann es vorteilhaft sein, die Distanz zwischen der durch die erste Transportauftraginformation repräsentierten Beladeposition und der durch die ersten Zugfahrzeuginformationen repräsentierten aktuellen Position des ersten Zugfahrzeugs beim Bestimmen des ersten Zugfahrzeugs aus der Mehrzahl von Zugfahrzeugen zu minimieren, z.B. um den Energieverbrauch zu minimieren. Dabei soll unter der Distanz zwischen der aktuellen Position des ersten Zugfahrzeugs und der Beladeposition beispielsweise die Länge einer Route (z.B. der kürzesten oder schnellsten Route) zwischen der aktuellen Position des ersten Zugfahrzeugs und der Beladeposition verstanden werden. Zum Beispiel ist die aktuelle Position des ersten Zugfahrzeugs in der in Fig. 1a gezeigten Situation am nächsten an der Beladeposition 101.

Das Bestimmen des ersten Zugfahrzeugs in Schritt 302 kann ferner das Bestimmen des ersten Abschnitts 112a der Transportroute 112a/b umfassen. Im Folgenden wird beispielsweise davon ausgegangen, dass der erste Abschnitt 112a der Transportroute 112a/b derart (z.B. gemäß vorgegebenen Regeln wie einem Algorithmus, z.B. einem Routenalgorithmus) bestimmt wird, dass der erste Abschnitt 112a der Transportroute 112a/b an einem Ladepunkt der Mehrzahl von Ladepunkten 107 bis 109 endet und die durch die ersten Zugfahrzeuginformationen repräsentierte geschätzte aktuelle Reichweite des ersten Zugfahrzeugs (z.B. mit einer vorgegebenen Mindestwahrscheinlichkeit) ausreicht, um eine Distanz (i) von der der durch die ersten Zugfahrzeuginformationen repräsentierten aktuellen Position des ersten Zugfahrzeugs zur Startposition 110 des ersten Abschnitts und (ii) von der Startposition 110 des ersten Abschnitts 112a entlang der Transportroute 112a/b bis zur Endposition 113 des ersten Abschnitts 112a der Transportroute 112a/b zurückzulegen, ohne dass die Batterie des ersten Zugfahrzeugs 101 aufgeladen werden muss. Die Startposition des entsprechend bestimmten ersten Abschnitts 112a der Transportroute 112a/b in Fig. 1a-c entspricht der Beladeposition 110 und die Endposition 113 des ersten Abschnitts 112a befindet sich beispielsweise an dem ersten Ladepunkt 107.

Wenn das erste Zugfahrzeug 101 aus der Mehrzahl von Zugfahrzeugen 101 bis 105 in Schritt 301 bestimmt wurde, kann die Servervorrichtung 2 ferner bewirken, dass das erste Zugfahrzeug 101 mit dem Anhänger 106 das erste Zuggespann zum Transport der Waren entlang des ersten Abschnitts der Transportroute bildet. Zu diesem Zweck kann die Servervorrichtung 2 eine erste Steuerinformation über die Kommunikationsverbindung 114 an das Zugfahrzeug 101 senden. Zum Beispiel bewirkt die erste Steuerinformation, dass sich das Zugfahrzeug 101 selbsttätig zur Beladeposition 110 bewegt und, wenn es ist an der Beladeposition 110 eingetroffen ist, ein Zuggespann mit dem Anhänger 106 bildet und den Anhänger 106 anschließend entlang des ersten Abschnitts 112a der Transportroute 112a/b zieht.

In einem Schritt 303 werden zweiten Zugfahrzeuginformationen erhalten, wobei die zweiten Zugfahrzeuginformationen, zumindest für das erste Zugfahrzeug 101 und das zweite Zugfahrzeug 102 der Mehrzahl von Zugfahrzeugen 101 bis 105, eine aktuelle Position des jeweiligen Zugfahrzeugs und eine geschätzte aktuelle Reichweite des jeweiligen Zugfahrzeugs repräsentieren.

Im Folgenden wird davon ausgegangen, dass die zweiten Zugfahrzeuginformationen für jedes der Zugfahrzeuge der Mehrzahl von Zugfahrzeugen 101 bis 105 eine jeweilige Zugfahrzeuginformation, die die aktuelle Position des jeweiligen Zugfahrzeugs und die geschätzte aktuelle Reichweite des jeweiligen Zugfahrzeugs repräsentiert, umfassen. Zum Beispiel empfängt die Servervorrichtung 2 die zweiten Zugfahrzeuginformationenin Schritt 301 über die Kommunikationsverbindungen 114, 116 bis 119 von den Zugfahrzeugen 101 bis 105. Die zweiten Zugfahrzeuginformationen unterscheiden sich von den ersten Zugfahrzeuginformationen beispielsweise dadurch, dass sie zu einem späteren Zeitpunkt als die ersten Zugfahrzeuginformationen gesendet wurden und somit aktuelle Positionen und aktuelle geschätzte Reichweiten zu einem späteren Zeitpunkt repräsentieren. Zum Beispiel repräsentieren die ersten Zugfahrzeuginformationen, die aktuellen Positionen und aktuellen geschätzten Reichweiten in der in Fig. 1a gezeigten Situation, wohingegen die zweiten Zugfahrzeuginformationen, die aktuellen Positionen und aktuellen geschätzten Reichweiten in der in Fig. 1b gezeigten Situation, repräsentieren.

Die Schritte 300 bis Schritt 302 werden beispielsweise vor dem Transport der Waren entlang der Transportroute 112a/b, beispielsweise in der in Fig. 1a gezeigten Situation, ausgeführt; und die Schritte 303 und 304 werden beispielsweise während des Transports der Waren auf dem ersten Abschnitt 112a der Transportroute 112a/b, beispielsweise in der in Fig. 1b gezeigten Situation, ausgeführt, z.B. wenn sich das erste Zuggespann der Endposition 113 nähert, z.B. wenn die Distanz zwischen der durch die zweiten Zugfahrzeuginformationen repräsentierte aktuelle Position des ersten Zugfahrzeugs 101 und der Endposition 113 einen Distanzschwellwert (z.B. 50km, 100km , 200km) unterschreitet.

In einem Schritt 304 wird das zweite Zugfahrzeug 102 aus der Mehrzahl von Zugfahrzeugen 101 bis 105 bestimmt, um mit dem Anhänger 106 ein zweites Zuggespann zum Transport der Waren entlang des zweiten Abschnitts 112b der Transportroute 112a/b zu bilden, wobei das Bestimmen des zweiten Zugfahrzeugs 102 aus der Mehrzahl von Zugfahrzeugen 101 bis 105 unter Berücksichtigung der ersten Transportauftraginformation und der zweiten Zugfahrzeuginformationen erfolgt.

Unter dem Bestimmen des zweiten Zugfahrzeugs 102 aus der Mehrzahl von Zugfahrzeugen 101 bis 105 soll beispielsweise verstanden werden, dass das zweite Zugfahrzeug 102 aus der Mehrzahl von Zugfahrzeugen 101 bis 105 ausgewählt wird, um mit dem Anhänger 106 das zweite Zuggespann zum Transport der Waren entlang des zweiten Abschnitts 112b der Transportroute 112a/b zu bilden. Dabei ist der Anhänger 106 des ersten Zuggespanns und des zweiten Zuggespanns identisch.

Das zweite Zugfahrzeug 102 kann, wie das erste Zugfahrzeug 101, derart bestimmt werden, dass vorgegebene Kriterien erfüllt und/oder im Vergleich zu anderen Zugfahrzeugen der Mehrzahl von Zugfahrzeugen 101 bis 105 optimiert sind. Beispiele für diese Kriterien sind (i) eine Distanz zwischen der Endposition 113 des ersten Abschnitts 112a der Transportroute 112a/b und der durch die zweiten Zugfahrzeuginformationen repräsentierten aktuellen Position des zweiten Zugfahrzeugs und/oder (ii) die durch die zweiten Zugfahrzeuginformationen repräsentierte geschätzte aktuelle Reichweite des zweiten Zugfahrzeugs und/oder (iii) eine Distanz zwischen der durch die zweiten Zugfahrzeuginformationen repräsentierten aktuellen Position des ersten Zugfahrzeugs und der durch die zweiten Zugfahrzeuginformationen repräsentierten aktuellen Position des zweiten Zugfahrzeugs. Zum Beispiel ist die aktuelle Position des zweiten Zugfahrzeugs 102 in der in Fig. 1b gezeigten Situation an der Endposition 113 des ersten Abschnitts 112a der Transportroute 112a/b.

Das Bestimmen des zweiten Zugfahrzeugs in Schritt 304 kann ferner das Bestimmen des zweiten Abschnitts 112b der Transportroute 112a/b umfassen. Im Folgenden wird beispielsweise davon ausgegangen, dass der zweite Abschnitt 112a der Transportroute 112a/b derart (z.B. gemäß vorgegebenen Regeln wie einem Algorithmus, z.B. einem Routenalgorithmus) bestimmt wird, dass der zweite Abschnitt 112a der Transportroute 112a/b an der Endposition 113 des ersten Abschnitts 112a der Transportroute 112a/b startet und die durch die zweiten Zugfahrzeuginformationen repräsentierte geschätzte aktuelle Reichweite des zweiten Zugfahrzeugs (z.B. mit einer vorgegebenen Mindestwahrscheinlichkeit) ausreicht, um eine Distanz (i) von der Endposition 113 des ersten Abschnitts 112a entlang der Transportroute 112a/b bis zur Endposition des zweiten Abschnitts 112b der Transportroute 112a/b zurückzulegen, ohne dass die Batterie des zweiten Zugfahrzeugs 102 aufgeladen werden muss. Die Startposition des entsprechend bestimmten zweiten Abschnitts 112b der Transportroute 1 12a/b in fig. 1a-c entspricht der Endposition 113 des ersten Abschnitts 112a der Transportroute und die Endposition des zweiten Abschnitts 112b entspricht der Entladeposition 111.

Wenn das zweite Zugfahrzeug 101 aus der Mehrzahl von Zugfahrzeugen 101 bis 105 in Schritt 304 bestimmt wurde, kann die Servervorrichtung 2 ferner bewirken, dass das zweite Zugfahrzeug 101 mit dem Anhänger 106 das zweite Zuggespann zum Transport der Waren entlang des zweiten Abschnitts 112b der Transportroute 112a/b bildet. Zu diesem Zweck kann die Servervorrichtung 2 eine zweite Steuerinformation über die Kommunikationsverbindung 116 an das Zugfahrzeug 101 senden. Zum Beispiel bewirkt die zweite Steuerinformation, dass sich das Zugfahrzeug 102 an der Endposition 113 bereithält, und, wenn der Anhänger 106 an der Beladeposition 110 eintrifft, ein Zuggespann mit dem Anhänger 106 bildet und den Anhänger 106 anschließend entlang des zweiten Abschnitts 112b der Transportroute 112a/b zieht.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren zum Bestimmen eines oder mehrerer Zugfahrzeuge (101-105) für ein Zuggespann in einem System (1) umfassend eine Mehrzahl von elektrisch angetriebenen Zugfahrzeugen (101-105), wobei jedes Zugfahrzeug der Mehrzahl von Zugfahrzeugen (101-105) eingerichtet ist, mit einem jeweiligen Anhänger (106) ein Zuggespann zu bilden und den jeweiligen Anhänger (106) zu ziehen, wobei das Verfahren umfasst:
- Erhalten (300) einer ersten Transportauftraginformation eines ersten Transportauftrags, wobei die erste Transportauftraginformation eine Beladeposition (110), an der ein Anhänger (106)mit Waren beladen werden soll, und eine Entladeposition (111), an der die Waren von dem Anhänger entladen werden sollen, repräsentieren,
- Erhalten (301) von ersten Zugfahrzeuginformationen, wobei die ersten Zugfahrzeuginformationen, zumindest für ein erstes Zugfahrzeug (101) der Mehrzahl von Zugfahrzeugen (101-105), eine aktuelle Position des jeweiligen Zugfahrzeugs und eine geschätzte aktuelle Reichweite des jeweiligen Zugfahrzeugs repräsentieren,
- Bestimmen (302) des ersten Zugfahrzeugs (101) aus der Mehrzahl von Zugfahrzeugen (101-105), um mit dem Anhänger (106) ein erstes Zuggespann zum Transport der Waren entlang eines ersten Abschnitts (112a) einer Transportroute (112a/b) zu bilden, wobei das Bestimmen (302) des ersten Zugfahrzeugs (101) aus der Mehrzahl von Zugfahrzeugen (101-105) unter Berücksichtigung der ersten Transportauftraginformation und der ersten Zugfahrzeuginformationen erfolgt.

2. Verfahren nach Anspruch 1, wobei die Transportroute (112a/b) von der Beladeposition (110) zur Entladeposition (111) verläuft, und/oder wobei das Bestimmen (302) des ersten Zugfahrzeugs (101) aus der Mehrzahl von Zugfahrzeugen (101-105) das Bestimmen des ersten Abschnitts (112a) der Transportroute (112a/b) und/oder der Transportroute (112a/b) umfasst.

3. Verfahren nach einem der Ansprüche 1 und 2, wobei das Verfahren ferner umfasst:
- Erhalten (303) von zweiten Zugfahrzeuginformationen, wobei die zweiten Zugfahrzeuginformationen, zumindest für das erste Zugfahrzeug (101) und ein zweites Zugfahrzeug (102) der Mehrzahl von Zugfahrzeugen (101-105), eine aktuelle Position des jeweiligen Zugfahrzeugs und eine geschätzte aktuelle Reichweite des jeweiligen Zugfahrzeugs repräsentiert,
- Bestimmen (304) des zweiten Zugfahrzeugs (102) aus der Mehrzahl von Zugfahrzeugen (101-105), um mit dem Anhänger (106) ein zweites Zuggespann zum Transport der Waren entlang eines zweiten Abschnitts (112b) der Transportroute (112a/b) zu bilden, wobei das Bestimmen (304) des zweiten Zugfahrzeugs (102) aus der Mehrzahl von Zugfahrzeugen (101-105) unter Berücksichtigung der ersten Transportauftraginformation und der zweiten Zugfahrzeuginformationen erfolgt.

4. Verfahren nach Anspruch 3, wobei das Bestimmen (304) des zweiten Zugfahrzeugs (102) aus der Mehrzahl von Zugfahrzeugen (101-105) das Bestimmen des zweiten Abschnitts (1 12b) der Transportroute (112a/b) und/oder der Transportroute (112a/b) umfasst.

5. Verfahren nach einem der Ansprüche 1 bis 4, wobei die erste Transportauftraginformation ferner repräsentiert:
- einen Beladezeitpunkt und/oder Beladezeitraum; und/oder
- einen Entladezeitpunkt und/oder Entladezeitraum; und/oder
- eine Verderblichkeit und/oder Haltbarkeit und/oder Lagerbarkeit der Waren; und/oder
- einen Priorisierungswert für den Transport der Waren von der Beladeposition (110) zu der Entladeposition (111).

6. Verfahren nach einem der Ansprüche 1 bis 5, wobei ein Priorisierungswert für den Transport der Waren von der Beladeposition (110) zu der Entladeposition (111) unter Berücksichtigung einer Sensorinformation bestimmt wird, wobei die Sensorinformation einen durch einen Sensor des Anhängers (106) erfassten Parameter, insbesondere einen für einen aktuell und/oder zukünftig erwarteten Warenzustand charakteristischen durch den Sensor des Anhänger (106) erfassten Parameter, repräsentiert.

7. Verfahren nach Anspruch 6, wobei das Verfahren zumindest einen der folgenden Schritte umfasst:
- Erfassen und/oder Erhalten der Sensorinformation; und/oder
- Erhalten und/oder Bestimmen des Priorisierungswerts für den Transport der Waren von der Beladeposition zu der Entladeposition.

8. Verfahren nach einem der Ansprüche 5 bis 7, wobei das Bestimmen (302) des ersten Zugfahrzeugs (101) unter Berücksichtigung des Priorisierungswerts für den Transport der Waren von der Beladeposition (110) zu der Entladeposition (111) erfolgt.

9. Verfahren nach Anspruch 8, wobei die erste Transportauftraginformation Teil einer Mehrzahl von Transportauftraginformationen konkurrierender Transportaufträge ist, und wobei jede dieser Transportauftraginformationen der Mehrzahl von Transportauftraginformationen konkurrierender Transportaufträge einen jeweiligen Priorisierungswert repräsentiert, und wobei das Bestimmen (302) des ersten Zugfahrzeugs (101) unter Berücksichtigung der durch die Mehrzahl von Transportauftraginformationen konkurrierender Transportaufträge repräsentierten Priorisierungswerte erfolgt.

10. Verfahren nach einem der Ansprüche 1 bis 9, wobei das System ferner eine Mehrzahl von Ladepunkten (107-109) eines Energieversorgungsnetzes umfasst, wobei jedes Zugfahrzeug der Mehrzahl von Zugfahrzeugen (101-105) eine jeweilige Batterie aufweist, und wobei jeder Ladepunkt der Mehrzahl von Ladepunkten (107-109) eingerichtet ist, mit einem jeweiligen Zugfahrzeug der Mehrzahl von Zugfahrzeugen (101-105) verbunden zu werden, um die jeweilige Batterie des jeweiligen Zugfahrzeugs aufzuladen.

11. Verfahren nach Anspruch 10, wobei jedes Zugfahrzeug der Mehrzahl von Zugfahrzeugen (101-105) eingerichtet ist, dem Energieversorgungsnetz seine jeweilige Batterie zur Nutzung als Energiespeicher Verfügung zu stellen, wenn das jeweilige Zugfahrzeug mit einem Ladepunkt der Mehrzahl von Ladepunkten (107-109) verbunden ist, und wobei das Verfahren ferner umfasst:
- Erhalten von ersten Energiespeicherbedarfsinformationen, wobei die ersten Energiespeicherbedarfsinformationen, zumindest für einen ersten Ladepunkt der Mehrzahl von Ladepunkten (107-109), einen jeweiligen aktuellen und/oder geschätzten zukünftigen Bedarf zur Nutzung von Batterien der Mehrzahl von Zugfahrzeugen (101-105) als Energiespeicher für das Energieversorgungsnetz an dem jeweiligen Ladepunkt repräsentiert, wobei der erste Ladepunkt mit dem ersten Zugfahrzeug verbunden ist, um die Batterie des ersten Zugfahrzeugs zu laden, und wobei das Bestimmen (302) des ersten Zugfahrzeugs (101) aus der Mehrzahl von Zugfahrzeugen (101-105) ferner unter Berücksichtigung der ersten Energiespeicherbedarfsinformationen erfolgt.

12. Verfahren nach einem der Ansprüche 1 bis 11, wobei die ersten Zugfahrzeuginformationen von dem Anhänger (106) bereitgestellt werden.

13. Computerprogramm umfassend Programmanweisungen, die dazu ausgebildet sind, bei Ausführung durch mindestens einen Prozessor (200) eines Servers (2), den Server (2) zu veranlassen, das Verfahren nach einem der Ansprüche 1 bis 12 auszuführen.

14. Servervorrichtung umfassend Mittel (200-203) eingerichtet zur Ausführung des Verfahrens nach einem der Ansprüche 1 bis 12.

15. System umfassend:
- eine Servervorrichtung (2) nach Anspruch 14,
- einen Anhänger (106), und
- eine Mehrzahl von Zugfahrzeugen (101-105), wobei jedes Zugfahrzeug der Mehrzahl von Zugfahrzeugen (101-105) eingerichtet ist, mit dem Anhänger (106) ein Zuggespann zu bilden und den Anhänger (106) zu ziehen.
